(19) **Europäisches Patentamt / European Patent Office / Office européen des brevets**

(11) **EP 3 885 871 B1**

(12) **EUROPEAN PATENT SPECIFICATION**

(45) Date of publication and mention
of the grant of the patent:
**15.03.2023 Bulletin 2023/11**

(21) Application number: **18940964.2**

(22) Date of filing: **21.11.2018**

(51) International Patent Classification (IPC):
**G05D 1/10** *(2006.01)* **G05D 1/00** *(2006.01)*

(52) Cooperative Patent Classification (CPC):
**G05D 1/0094; B64U 2101/00; B64U 2101/30**

(86) International application number:
**PCT/CN2018/116659**

(87) International publication number:
**WO 2020/103022 (28.05.2020 Gazette 2020/22)**

(54) **SURVEYING AND MAPPING SYSTEM, SURVEYING AND MAPPING METHOD AND APPARATUS, DEVICE AND MEDIUM**

VERMESSUNGS- UND KARTIERUNGSSYSTEM, VERMESSUNGS- UND KARTIERUNGSVERFAHREN UND GERÄT, VORRICHTUNG UND MEDIUM

SYSTÈME D'ARPENTAGE ET DE CARTOGRAPHIE, PROCÉDÉ ET APPAREIL D'ARPENTAGE ET DE CARTOGRAPHIE, DISPOSITIF ET SUPPORT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.09.2021 Bulletin 2021/39**

(73) Proprietor: **Guangzhou Xaircraft Technology Co., Ltd**
**Tianhe District**
**Guangzhou,**
**Guangdong 510000 (CN)**

(72) Inventors:
• **LIU, Peng**
**Guangzhou, Guangdong 510000 (CN)**
• **JIN, Xiaohui**
**Guangzhou, Guangdong 510000 (CN)**

(74) Representative: **Bals & Vogel Patentanwälte PartGmbB**
**Konrad-Zuse-Str. 4**
**44801 Bochum (DE)**

(56) References cited:
**WO-A1-2017/197556     US-A1- 2016 117 853**
**US-A1- 2018 189 971**

**Description**

TECHNICAL FIELD

Embodiments of the present disclosure relate to the technical field of surveying and mapping, and, for example, to a surveying and mapping system, a surveying and mapping method and device.

BACKGROUND

In recent years, Unmanned Aerial Vehicles (UAVs) have been widely used in the fields of surveying and mapping, emergency response, disaster relief, and the like due to their characteristics such as high efficiency, flexibility, and low cost. The UAV-based aerial surveying and mapping (abbreviated as "aerial survey") technology can greatly reduce the work period, and the investment of manpower and financial resources involved in traditional aerial surveying and mapping technologies, and has more realistic significance in the fields of surveying and mapping and the like.

In the UAV-based aerial surveying and mapping technology, the observation of the current situation of an aerially photographed area is carried out by the mounted video capture device using a remote image transmission technology, and at the same time the taken photos are stitched by using an aerially photographed image stitching technology to obtain an overall image of the aerially photographed area. In the traditional UAV-based aerial survey method, when photos are being taken, in general, mobile surveying and mapping is performed in an area to be surveyed and mapped in a traversal manner along parallel lines, and it is usually required that each two successive photos have a certain degree of overlap for ensuring a successful stitching. Each photo is required to overlap with other photos to a certain degree in both horizontal and vertical directions in order to ensure normal stitching in the later stage, and in general, the degree of overlap is generally required to be greater than 50% in order to ensure the normal stitching in the later stage.

During the implementation of the present disclosure, the inventors have found that the relevant techniques in the prior art have the following disadvantages that the traditional UAV-based aerial survey methods are all used for surveying and mapping an aerially photographed area of a large-area land, and multiple photos having a relatively high degree of overlap are taken during the surveying and mapping. Stitching the above photos taken by the UAV takes a long time and has a low efficiency. In addition, if the photos obtained by the UAV are uploaded to a server for stitching processing, the processes of data uploading and processing takes a longer time. Moreover, when the traditional UAV-based aerial survey method is applied to surveying and mapping of a small plot, not only the operation is complicated and a long processing time is required, but also high hardware cost is involved.

US20160117853A1 discloses a system for providing flight information related to an unmanned aerial vehicle (UAV). The UAV is coupled to a payload via a carrier that permits the payload to move relative to the UAV. The system includes a receiver configured to receive UAV state information including at least attitude information of the UAV and payload state information including at least attitude information of the payload relative to the UAV when the UAV is airborne; and one or more processors, collectively or individually, configured to simultaneously display the UAV state information and the carrier state information on a display that is remote to the UAV.

WO2017197556A1 discloses systems, methods, and computer-readable storage devices for the coordination of actions between movable objects. For example, a method may coordinate actions between at least a first and a second movable object. The method may detect, by the first movable object, the position of a target. The method may control the position of a first movable object based on the position of the target. A command may be received for the first movable object to perform an action in coordination with the second movable object. In some embodiments, the command may be to take images of the target to create a bullet time effect.

US20180189971A1 discloses devices and methods for capturing images of a game by an unmanned autonomous vehicle (UAV). A processor of the UAV may determine game play rules of the game. The processor may determine a location of the game object. The processor may calculate a position from which to capture an image of the game based on the determined game play rules and the location of the game object. The processor may capture an image of the game from the calculated position.

SUMMARY

Embodiments of the present disclosure provide a surveying and mapping system, a surveying and mapping method and device, so as to reduce the surveying and mapping cost and improve the surveying and mapping efficiency.

Embodiments of the present disclosure provide a surveying and mapping system, the surveying and mapping system includes a control terminal, an unmanned aerial vehicle for surveying and mapping, and a ground terminal.

The control terminal is configured to determine surveying and mapping parameters matching an area to be surveyed and mapped and send the surveying and mapping parameters to the unmanned aerial vehicle for surveying and mapping, and the surveying and mapping parameters include a plurality of sample points for surveying and mapping based on which the unmanned aerial vehicle for surveying and mapping performs surveying and mapping in the area to be surveyed and mapped.

The unmanned aerial vehicle for surveying and mapping is configured to receive the surveying and mapping parameters and perform a flight photographing in the area to be surveyed and mapped according to the surveying and mapping parameters to obtain a surveying and mapping photo collection corresponding to the plurality of sample points for surveying and mapping.

The ground terminal is configured to obtain the surveying and mapping photo collection and perform at least one of photo combination and photo stitching on a plurality of photos of the surveying and mapping photo collection to obtain a surveying and mapping map corresponding to the area to be surveyed and mapped.

The control terminal is configured to: obtain a reference photographing location point corresponding to the area to be surveyed and mapped, and establish a mapping relationship between a photographing point in a combined photographing point set and the reference photographing location point; determine a plurality of auxiliary photographing location points corresponding to the reference photographing location point according to the mapping relationship and according to a preset relative position relationship between each two photographing points in the combined photographing point set; and use the reference photographing location point and the plurality of auxiliary photographing location points as the plurality of sample points for surveying and mapping based on which the unmanned aerial vehicle for surveying and mapping performs surveying and mapping in the area to be surveyed and mapped. Or, the control terminal is configured to: determine one or a plurality of combined photographing areas for surveying and mapping within the area to be surveyed and mapped according to information of the area to be surveyed and mapped and according to a combined photographing area corresponding to a combined photographing point set; determine a plurality of photographing location points in the combined photographing area for surveying and mapping according to a preset relative position relationship between each two photographing points in the combined photographing point set; and use the plurality of photographing location points as the plurality of sample points for surveying and mapping based on which the unmanned aerial vehicle for surveying and mapping performs surveying and mapping in the area to be surveyed and mapped.

Optionally, the surveying and mapping system further includes an unmanned aerial vehicle for operation.

The control terminal is further configured to use the area to be surveyed and mapped as an operation area, obtain map tile data corresponding to the operation area from the ground terminal, generate an area map of the operation area according to the map tile data and display the area map, determine at least one operation plot in the operation area according to at least one area locating point selected by a user from the area map, generate an operation route corresponding to the at least one operation plot, and send the operation route to the unmanned aerial vehicle for operation.

The unmanned aerial vehicle for operation is configured to receive the operation route and perform a flight operation in the at least one operation plot according to the operation route.

Embodiments of the present disclosure further provide a surveying and mapping method for a control terminal, the surveying and mapping method for a control terminal is applied to the surveying and mapping system of the embodiments of the present disclosure, and the method includes:

> determining surveying and mapping parameters matching an area to be surveyed and mapped, the surveying and mapping parameters including a plurality of sample points for surveying and mapping based on which an unmanned aerial vehicle for surveying and mapping performs surveying and mapping in the area to be surveyed and mapped; and
> sending the surveying and mapping parameters to the unmanned aerial vehicle for surveying and mapping.

Optionally, the determining surveying and mapping parameters matching an area to be surveyed and mapped includes:

> obtaining a reference photographing location point corresponding to the area to be surveyed and mapped, and establishing a mapping relationship between a photographing point in a combined photographing point set and the reference photographing location point;
> determining a plurality of auxiliary photographing location points corresponding to the reference photographing location point according to the mapping relationship and a preset relative position relationship between each two photographing points in the combined photographing point set;
> using the reference photographing location point and the plurality of auxiliary photographing location points as the plurality of sample points for surveying and mapping based on which the unmanned aerial vehicle for surveying and mapping performs surveying and mapping in the area to be surveyed and mapped.

Optionally, the determining surveying and mapping parameters matching an area to be surveyed and mapped includes:

> determining one or a plurality of combined photographing areas for surveying and mapping within the area to be surveyed and mapped according to information of the area to be surveyed and mapped and a combined photographing area corresponding to a combined photographing point set;
> determining a plurality of photographing location points in the combined photographing area for surveying and mapping according to a preset relative position relationship between each two photographing points in the combined photographing point set; and

using the plurality of photographing location points as the plurality of sample points for surveying and mapping based on which the unmanned aerial vehicle for surveying and mapping performs surveying and mapping in the area to be surveyed and mapped.

Optionally, there is an overlapping area between each two of a plurality of photos taken according to a plurality of photographing points in the combined photographing point set; and/or there is an overlapping area between each two of the plurality of combined photographing areas for surveying and mapping determined in the area to be surveyed and mapped. The combined photographing areas for surveying and mapping are photographing areas formed by combining and/or stitching the plurality of photos after obtaining the plurality of photos taken according to the plurality of photographing points in the combined photographing point set; and a surveying and mapping map of the area to be surveyed and mapped is formed by combining and/or stitching each of the plurality of combined photographing areas for surveying and mapping.

Optionally, photographing points in the combined photographing point set include a central photographing point and four peripheral photographing points, the four peripheral photographing points are four vertices of a rectangle centered on the central photographing point, respectively.

A composite photo obtained by photographing based on all the photographing points in the combined photographing point set is of a rectangular shape.

Embodiments of the present disclosure further provide a surveying and mapping method for an unmanned aerial vehicle for surveying and mapping, the surveying and mapping method for an unmanned aerial vehicle for surveying and mapping is applied to the surveying and mapping system of the embodiments of the present disclosure, and the method includes:

receiving surveying and mapping parameters sent by a control terminal, the surveying and mapping parameters being determined by the control terminal according to an area to be surveyed and mapped, and the surveying and mapping parameters including a plurality of sample points for surveying and mapping based on which an unmanned aerial vehicle for surveying and mapping performs surveying and mapping in the area to be surveyed and mapped; and

performing a flight photographing in the area to be surveyed and mapped according to the surveying and mapping parameters to obtain a surveying and mapping photo collection corresponding to the plurality of sample points for surveying and mapping.

Optionally, the performing a flight photographing in the area to be surveyed and mapped according to the surveying and mapping parameters to obtain a surveying and mapping photo collection corresponding to the plurality of sample points for surveying and mapping includes:

obtaining, when that it is determined to fly to each of the plurality of sample points for surveying and mapping according to geographic position information of each of the plurality of sample points for surveying and mapping, surveying and mapping photos respectively corresponding to each of the plurality of sample points for surveying and mapping by photographing to form the surveying and mapping photo collection.

Optionally, before the receiving surveying and mapping parameters sent by a control terminal, the surveying and mapping method for an unmanned aerial vehicle for surveying and mapping further includes:

receiving at least one flight control instruction sent by the control terminal, and performing at least one of the following in air according to the flight control instruction: moving in a set direction and moving by a set distance;

hovering at a current position according to a hovering instruction sent by the control terminal; and

feeding a geographic position coordinate of the current position back to the control terminal according to position query information sent by the control terminal, the geographic position coordinate being determined by the control terminal as a reference photographing location point.

Optionally, the surveying and mapping parameters further include a set flight altitude, and the performing a flight photographing in the area to be surveyed and mapped according to the surveying and mapping parameters to obtain a surveying and mapping photo collection corresponding to the plurality of sample points for surveying and mapping includes: performing the flight photographing in the area to be surveyed and mapped at the set flight altitude according to the surveying and mapping parameters to obtain the surveying and mapping photo collection corresponding to the plurality of sample points for surveying and mapping.

Optionally, after the performing a flight photographing in the area to be surveyed and mapped according to the surveying and mapping parameters to obtain a surveying and mapping photo collection corresponding to the plurality of sample points for surveying and mapping, the surveying and mapping method for an unmanned aerial vehicle for surveying and mapping further includes at least one of the following:

sending each surveying and mapping photo in the surveying and mapping photo collection back to a ground terminal respectively according to a photographing sequence; and/or

storing each surveying and mapping photo in the surveying and mapping photo collection in a built-in memory card according to the photographing sequence.

Embodiments of the present disclosure further provide a surveying and mapping method for a ground terminal, the surveying and mapping method for a ground terminal is applied to the surveying and mapping system of the embodiments of the present disclosure, and the surveying and mapping method for a ground terminal includes:

obtaining a surveying and mapping photo collection, the surveying and mapping photo collection being obtained by a flight photographing performed by an unmanned aerial vehicle for surveying and mapping in an area to be surveyed and mapped according to surveying and mapping parameters sent by a control terminal, and the surveying and mapping parameters including a plurality of sample points for surveying and mapping based on which the unmanned aerial vehicle for surveying and mapping performs surveying and mapping in the area to be surveyed and mapped; and

performing at least one of photo combination and photo stitching on a plurality of photos of the surveying and mapping photo collection to obtain a surveying and mapping map corresponding to the area to be surveyed and mapped.

Optionally, the performing at least one of photo combination and photo stitching on a plurality of photos of the surveying and mapping photo collection to obtain a surveying and mapping map corresponding to the area to be surveyed and mapped includes:

obtaining, in the surveying and mapping photo collection, a central surveying and mapping photo taken at at least one central photographing point and peripheral surveying and mapping photos taken at a plurality of peripheral photographing points associated with each of the at least one central photographing point;

stitching each central surveying and mapping photo and corresponding peripheral surveying and mapping photos into a combined photographing photo according to a degree of photo overlap between each of the peripheral surveying and mapping photos and corresponding central surveying and mapping photo; and

obtaining the surveying and mapping map corresponding to the area to be surveyed and mapped according to the combined photographing photo corresponding to each of the at least one central photographing point.

Optionally, the surveying and mapping map of the area to be surveyed and mapped includes at least one of the following:

a digital surface model of the area to be surveyed and mapped, a three-dimensional map of the area to be surveyed and mapped, and a plane map of the area to be surveyed and mapped.

Embodiments of the present disclosure further provide a surveying and mapping device for a control terminal, the surveying and mapping device for a control terminal is applied to the surveying and mapping system of the embodiments of the present disclosure, and the surveying and mapping device for a control terminal includes:

a surveying and mapping parameter determining module, configured to determine surveying and mapping parameters matching an area to be surveyed and mapped, the surveying and mapping parameters including a plurality of sample points for surveying and mapping based on which an unmanned aerial vehicle for surveying and mapping performs surveying and mapping in the area to be surveyed and mapped; and

a surveying and mapping parameter sending module, configured to send the surveying and mapping parameters to the unmanned aerial vehicle for surveying and mapping.

BRIEF DESCRIPTION OF DRAWINGS

FIG. 1 is a schematic diagram illustrating a surveying and mapping system according to a first embodiment of the present disclosure.

FIG. 2 is a flowchart illustrating a surveying and mapping method for a control terminal according to a second embodiment of the present disclosure.

FIG. 3a is a flowchart illustrating a surveying and mapping method for a control terminal according to a third embodiment of the present disclosure.

FIG. 3b is a schematic diagram illustrating a position distribution of each photographing point in a combined photographing point set according to the third embodiment of the present disclosure.

FIG. 4a is a flowchart illustrating a surveying and mapping method for a control terminal according to a fourth embodiment of the present disclosure.

FIG. 4b is a schematic diagram illustrating a distribution of each photographing location point according to the fourth embodiment of the present disclosure.

FIG. 5 is a flowchart illustrating a surveying and mapping method for an unmanned aerial vehicle for surveying and mapping according to a fifth embodiment of the present disclosure;

FIG. 6 is a flowchart illustrating a surveying and mapping method for a ground terminal according to a sixth embodiment of the present disclosure.

FIG. 7 is a schematic diagram illustrating a surveying and mapping device for a control terminal according to a seventh embodiment of the present disclosure.

FIG. 8 is a schematic diagram illustrating a surveying and mapping device for an unmanned aerial vehicle for surveying and mapping according to an eighth embodiment of the present disclosure.

FIG. 9 is a schematic diagram illustrating a surveying and mapping device for a ground terminal according to a ninth embodiment of the present disclosure.

FIG. 10 is a schematic structural diagram illustrating a control terminal according to a tenth embodiment of the present disclosure.

DETAILED DESCRIPTION

The present disclosure will be described in further detail below with reference to the accompanying drawings and embodiments. It can be understood that the embodiments described herein are merely intended to illustrate the present disclosure and are not intended to limit the present disclosure.

Only some, but not all, of the contents related to the present disclosure are shown in the drawings for ease of description. It should be noted, prior to a more detailed discussion of exemplary embodiments, that some exemplary embodiments are described as processes or methods which are depicted as flowcharts. Although the flowcharts may describe the operations (or steps) as a sequential processing, many of the operations may be carried out in parallel, concurrently or simultaneously. In addition, the order of the operations may be rearranged. The processing may be terminated when its operations are completed, but could have additional steps not included in the figure. The processing may correspond to a method, a function, a procedure, a subroutine, a subprogram, etc.

First Embodiment

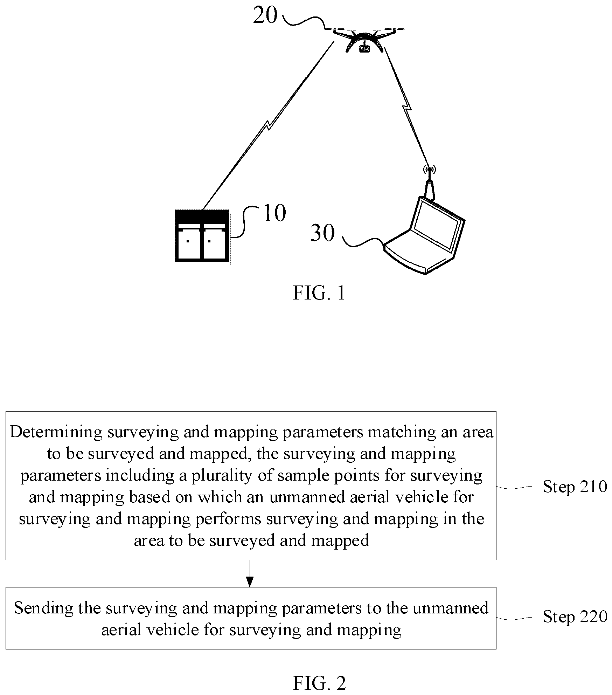

FIG. 1 is a schematic diagram illustrating a surveying and mapping system according to a first embodiment of the present disclosure. As shown in FIG. 1, a structure of the surveying and mapping system includes a control terminal 10, an unmanned aerial vehicle for surveying and mapping 20 and a ground terminal 30.

The control terminal 10 is configured to determine surveying and mapping parameters matching an area to be surveyed and mapped and send the surveying and mapping parameters to the unmanned aerial vehicle for surveying and mapping 20, and the surveying and mapping parameters include a plurality of sample points for surveying and mapping based on which the unmanned aerial vehicle for surveying and mapping 20 performs surveying and mapping in the area to be surveyed and mapped. The unmanned aerial vehicle for surveying and mapping 20 is configured to receive the surveying and mapping parameters and perform a flight photographing in the area to be surveyed and mapped according to the surveying and mapping parameters to obtain a surveying and mapping photo collection corresponding to the plurality of sample points for surveying and mapping. The ground terminal 30 is configured to obtain the surveying and mapping photo collection and perform at least one of photo combination and photo stitching on a plurality of photos of the surveying and mapping photo collection to obtain a surveying and mapping map corresponding to the area to be surveyed and mapped.

The control terminal 10 may be any device used to control the unmanned aerial vehicle for surveying and mapping, for example, this device is a remote controller for an unmanned aerial vehicle. The unmanned aerial vehicle for surveying and mapping 20 may be a UAV configured to survey and map an area to be surveyed and mapped to obtain data related to the area to be surveyed and mapped, for example, the unmanned aerial vehicle for surveying and mapping 20 can obtain a plurality of surveying and mapping photos of the area to be surveyed and mapped. The unmanned aerial vehicle for surveying and mapping 20 includes a photographing apparatus, and the photographing apparatus is configured to obtain the plurality of surveying and mapping photos corresponding to the area to be surveyed and mapped. The ground terminal 30 may be a device matched with the unmanned aerial vehicle for surveying and mapping 20, and configured to process data obtained by the unmanned aerial vehicle for surveying and mapping 20, for example, this device is a laptop or a tablet. Device types of the control terminal and the ground terminal are not limited in the embodiments of the present disclosure.

In the embodiments of the present disclosure, as shown in FIG. 1, the surveying and mapping system comprises a control terminal 10, an unmanned aerial vehicle for surveying and mapping 20 and a ground terminal 30. The control terminal 10 is responsible for determining a plurality of sample points for surveying and mapping based on which the unmanned aerial vehicle for surveying and mapping performs surveying and mapping in the area to be surveyed and mapped, and sending the surveying and mapping parameters formed by the sample points for surveying and mapping to the unmanned aerial vehicle for surveying and mapping 20. After receiving the surveying and mapping parameters, the unmanned aerial vehicle for surveying and mapping 20 can perform a flight photographing in the corresponding area to be surveyed and mapped according to information of the sample points for surveying and mapping in the surveying and mapping parameters, thereby obtaining a surveying and mapping photo collection corresponding to the plurality of sample points for surveying and mapping. The unmanned aerial vehicle for surveying and mapping 20 may send the obtained surveying and mapping photo collection to the ground terminal 30, such that the ground terminal 30 performs photo combination and/or photo stitching on a plurality of photos of the surveying and mapping photo collection to obtain the surveying and mapping map corresponding to the area to be surveyed and mapped. In order to be able to perform photo combination and/or photo stitching on the plurality of photos of the surveying and mapping photo collection to form a complete image, there is a certain degree of overlap between the plurality of photos corresponding to the plurality of sample points for surveying and mapping, but it is not required that each two successive photos have a certain degree of overlap. Therefore, processing time of image data can be greatly reduced, and efficiency of surveying and mapping is improved.

Optionally, the ground terminal 30 is further configured to generate map tile data corresponding to the area to be surveyed and mapped according to the surveying and mapping map corresponding to the area to be surveyed and mapped.

The map tile data is related data set to generate a tile map, which is formed by slicing map data with a slicing algorithm.

In the embodiment of the present disclosure, in addition to perform photo combination and/or photo stitching on the plurality of photos of the surveying and mapping photo collection to obtain the surveying and mapping map corresponding to the area to be surveyed and mapped, the ground terminal 30 can also generate the map tile data corresponding to the area to be surveyed and mapped according to the obtained surveying and mapping map by techniques such as a slicing algorithm. The map tile data may be set to generate a tile map. A pyramid model formed by the tile map is a multi-resolution hierarchical model. From a bottom to a top of a tile pyramid, the resolution is getting lower and lower, but the geographical range is unchanged. The map tile data generated by the ground terminal 30 can be set to locate a position in the area to be surveyed and mapped.

Optionally, the surveying and mapping system further includes an unmanned aerial vehicle for operation. The control terminal 10 is further configured to use the area to be surveyed and mapped as an operation area, obtain map tile data corresponding to the operation area from the ground terminal 30, generate an area map of the operation area according to the map tile data and display the area map, determine at least one operation plot in the operation area according to at least one area locating point selected by a user from the area map, generate an operation route corresponding to the at least one operation plot, and send the operation route to the unmanned aerial vehicle for operation. The unmanned aerial vehicle for operation is configured to receive the operation route and perform a flight operation in the at least one operation plot according to the operation route.

The unmanned aerial vehicle for operation 20 may be an unmanned aerial vehicle configured to perform operations on an area to be surveyed and mapped according to operational requirements, such as detecting the conditions of crops, soil, vegetation, water quality, or the like in the area to be surveyed and mapped, spraying pesticides in the area to be surveyed and mapped, or the like.

In the embodiments of the present disclosure, the control terminal 10 may also regard the area to be surveyed and mapped as an operation area, and obtain the map tile data corresponding to the operation area from the ground terminal 30. Since the map tile data includes a variety of map data with different resolutions, the control terminal 10 may generate the area map corresponding to the operation area according to the map tile data and resolution requirements of the unmanned aerial vehicle for operation, and display the area map. When controlling the control terminal 10, a user may select at least one area locating point from the area map. The area locating point may be set to determine at least one operation plot in the operation area. For example, a 10m*10m square operation plot is generated by taking the area locating point as a center. Correspondingly, after the operation plot is determined by the control terminal 10, the operation route corresponding to the operation plot may be generated and be sent to the unmanned aerial vehicle for operation by control terminal 10. For example, in a 10m*10m square operation plot, a vertex of an upper left corner is used as a starting point, and it is to travel 1m along edges of the operation plot in a clockwise direction every 5 seconds. Different operation routes may be generated according to different operation plots, which is not limited in the embodiments of the present disclosure. After the unmanned aerial vehicle for operation receives the operation route, it may perform the flight operation in a determined operation plot according to the operation route.

The working principle of the surveying and mapping system in the embodiments of the present disclosure is: a plurality of sample points for surveying and mapping in the area to be surveyed and mapped are determined and sent to the unmanned aerial vehicle for surveying and mapping by the control terminal. The unmanned aerial vehicle can perform a flight photographing in the area to be surveyed and mapped according to the determined sample points for surveying and mapping, obtain the surveying and mapping photo collection corresponding to the plurality of sample points for surveying and mapping, and send the surveying and mapping photo collection to the ground terminal. The ground terminal performs photo combination and/or photo stitching on the plurality of photos of the surveying and mapping photo collection to finally obtain a complete surveying and mapping map corresponding to the area to be surveyed and mapped.

The embodiments of the present disclosure form a new surveying and mapping system through a control terminal, an unmanned aerial vehicle for surveying and mapping and a ground terminal. The control terminal is configured to determine surveying and mapping parameters matching an area to be surveyed and mapped and send the surveying and mapping parameters to the unmanned aerial vehicle for surveying and mapping. The unmanned aerial vehicle for surveying and mapping is configured to receive the surveying and mapping parameters and perform a flight photographing in the area to be surveyed and mapped according to the surveying and mapping parameters to obtain a surveying and mapping photo collection corresponding to the plurality of sample points for surveying and mapping. The ground terminal is configured to obtain the surveying and mapping photo collection and perform at least one of photo combination and photo stitching on a plurality of photos of the surveying and mapping photo collection to obtain a surveying and mapping map corresponding to the area to be surveyed and mapped. In this way, a new surveying and mapping system is proposed, and the existing parallel-line-based mobile planning mode is replaced with an overall planning of the plurality of sample points for surveying and mapping based on the new surveying and mapping system, so that the problems of high cost and low surveying and mapping efficiency existing in the existing UAV-based aerial survey methods are solved, and the technical effects of reducing the surveying and mapping cost and improving the surveying and mapping efficiency are achieved.

Second Embodiment

FIG. 2 is a flowchart illustrating a surveying and mapping method for a control terminal according to a second embodiment of the present disclosure. This embodiment is applicable to a case of determining the plurality of sample points for surveying and mapping in the area to be surveyed and mapped. This method can be executed by a surveying and mapping device for a control terminal, this device can be implemented by means of software and/or hardware, and may generally be integrated in a control apparatus (for example, a remote controller for an unmanned aerial vehicle), and used in cooperation with an unmanned aerial vehicle for surveying and mapping that is responsible for aerial photography. Correspondingly, as shown in Figure 2, the method includes the following operations.

Step 210: determining surveying and mapping parameters matching an area to be surveyed and mapped, the surveying and mapping parameters including a plurality of sample points for surveying and mapping based on which an unmanned aerial vehicle for surveying and mapping performs surveying and mapping in the area to be surveyed and mapped.

The area to be surveyed and mapped is an area having clear latitude and longitude ranges, and may be an area with any shape and any size. The shape and size of the area to be surveyed and mapped are not limited in the embodiments of the present disclosure.

In the embodiments of the present disclosure, the surveying and mapping parameters (that is, the plurality of sample points for surveying and mapping based on which the unmanned aerial vehicle for surveying and mapping performs surveying and mapping in the area to be surveyed and mapped) matching the area to be surveyed and mapped may be determined by the control terminal. It can effectively improve the surveying and mapping efficiency of the entire surveying and mapping system by determining the plurality of sample points for surveying and mapping through the control terminal.

Step 220: sending the surveying and mapping parameters to the unmanned aerial vehicle for surveying and mapping.

Correspondingly, after the plurality of sample points for surveying and mapping based on which the unmanned aerial vehicle for surveying and mapping performs surveying and mapping in the area to be surveyed and mapped are determined by the control terminal, the plurality of sample points for surveying and mapping can be sent to the unmanned aerial vehicle for surveying and mapping, such that the unmanned aerial vehicle for surveying and mapping can obtain the surveying and mapping photo collection corresponding to the sample points for surveying and mapping. There is a certain degree of overlap between surveying and mapping photos obtained by the unmanned aerial vehicle for surveying and mapping according to the plurality of sample points for surveying and mapping, but it is not that each two successive photos have a certain degree of overlap. Therefore, processing time of image data can be greatly reduced, and efficiency of surveying and mapping is improved.

In the technical solution of this embodiment, the control terminal is used to determine the plurality of sample points for surveying and mapping based on which the unmanned aerial vehicle for surveying and mapping performs surveying and mapping in the area to be surveyed and mapped and send the surveying and mapping parameters to the unmanned aerial vehicle for surveying and mapping. In this way, a new method for determining sample points for surveying and mapping is proposed. The existing parallel-line-based mobile planning mode is replaced with an overall planning of the plurality of sample points for surveying and mapping, so that the problems of high cost and low surveying and mapping efficiency existing in the existing UAV-based aerial survey methods are solved, and the technical effects of reducing the surveying and mapping cost and improving the surveying and mapping efficiency are achieved.

Third Embodiment

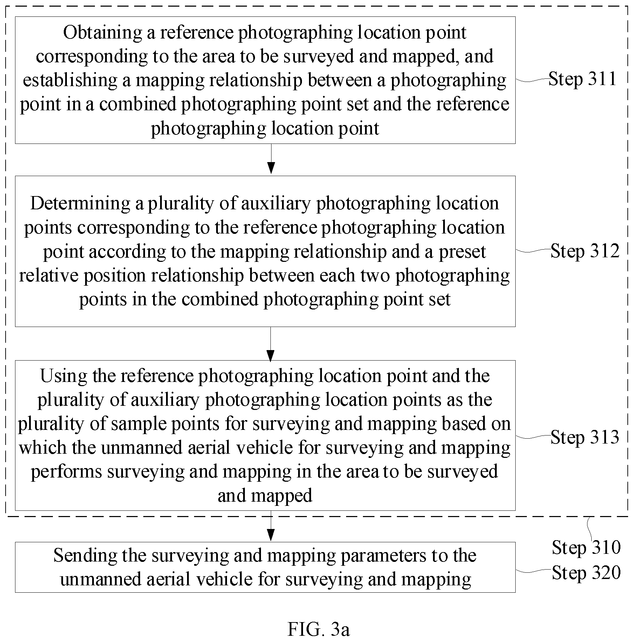

FIG. 3a is a flowchart illustrating a surveying and mapping method for a control terminal according to a third embodiment of the present disclosure. In this embodiment, one implementation manner of determining the surveying and mapping parameters matching the area to be surveyed and mapped is proposed. Correspondingly, as shown in FIG. 3a, the method of this embodiment may include the following steps.

Step 310: determining surveying and mapping parameters matching the area to be surveyed and mapped, wherein the surveying and mapping parameters include a plurality of sample points for surveying and mapping based on which an unmanned aerial vehicle for surveying and mapping performs surveying and mapping in the area to be surveyed and mapped.

Correspondingly, Step 310 may include the following operations.

Step 311: obtaining a reference photographing location point corresponding to the area to be surveyed and mapped, and establishing a mapping relationship between a photographing point in a combined photographing point set and the reference photographing location point.

The reference photographing location point is a location point in the area to be surveyed and mapped, which has a matching geographical position coordinate. The location point described above may be selected by a user from the area to be surveyed and mapped (for example, by clicking, or directly inputting latitude and longitude, or the like), or may be automatically determined based on the area shape of the area to be surveyed and mapped (the location point may be, for example, a central point of the area to be surveyed and mapped, or a corner point of the area to be surveyed and mapped, or the like). The combined photographing point set may be a set of photographing points which are preset based on a preset distribution rule, in which a plurality of photographing points may be included, and each two photographing points have relative direction and relative distance relationships therebetween. For example, the combined photographing point set includes five photographing points, which are located at the center and the four vertices of a rectangle, respectively. Here, a relative distance between each vertex and the central point is 100 m. For another example, each vertex is located in one of the four directions of east, south, west, and north, respectively.

In the embodiments of the present disclosure, all the sample points for surveying and mapping which are corresponding to the area to be surveyed and mapped may be obtained with the assistance of the combined photographing point set. Optionally, one of the points in the area to be surveyed and mapped may be firstly determined as a reference photographing location point, and then a mapping relationship is established between the reference photographing location point and one of the photographing points in the combined photographing point set.

In other words, each two photographing points in the combined photographing point set have a determined relative position relationship therebetween, but a correspondence relationship is not established between the photographing points and actual geographical position information, and therefore the photographing points cannot be directly mapped into the actual area to be surveyed and mapped. As long as actual geographical position information on one photographing point in the combined photographing point set is given, the geographical position information on all the photographing points in the combined photographing point set can be determined and obtained.

Typically, there is an overlapping area between each two of a plurality of photos taken according to a plurality of photographing points in the combined photographing point set. Correspondingly, after a plurality of photos are taken according to the plurality of photographing points in the combined photographing point set, the plurality of photos may be combined and/or stitched to form a complete combined area. The combined area may completely cover the area to be surveyed and mapped, or may cover only a part of the area to be surveyed and mapped, which is not limited in this embodiment.

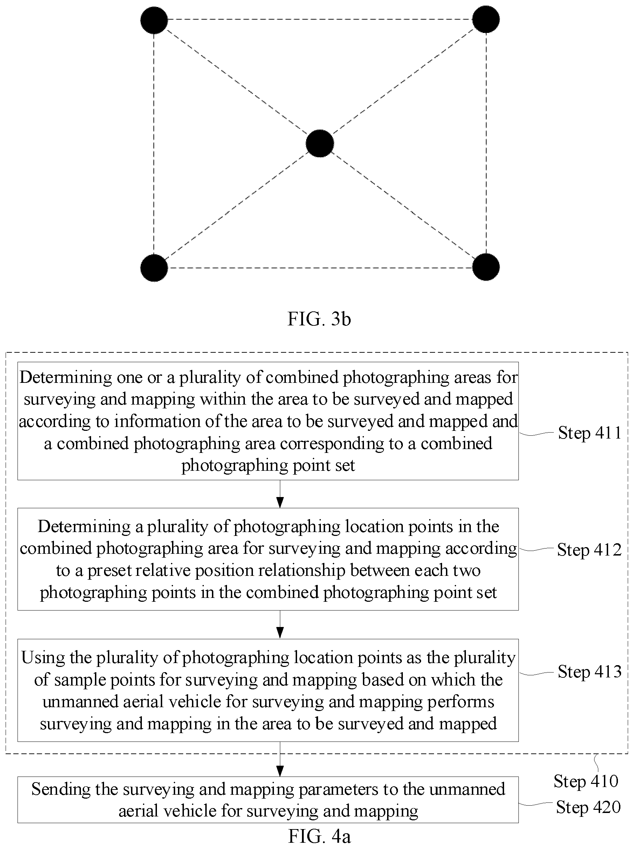

FIG. 3b is a schematic diagram illustrating a position distribution of each photographing point in a combined photographing point set according to the third embodiment of the present disclosure. In an optional embodiment of the present disclosure, as shown in FIG. 3b, the photographing points in the combined photographing point set include a central photographing point and four peripheral photographing points, and the peripheral photographing points are four vertices of a rectangle centered on the central photographing point, respectively. A composite photo obtained by photographing based on all the photographing points in the combined photographing point set is of a rectangular shape.

In the embodiments of the present disclosure, optionally, as shown in FIG. 3b, the combined photographing point set may include five photographing points, which are a central photographing point and four peripheral photographing points, respectively. The central photographing point may be a center of a rectangle, and correspondingly, the peripheral photographing points may be four vertices of the rectangle corresponding to the central photographing point. There is a certain position relationship between each two photographing points, and the position relationship should be set to satisfy such a condition that a complete rectangular photo can be obtained when all the photos taken at the respective photographing location points determined from all the photographing points are combined. The combination process is performed by covering all the photos according to the overlapping images between one another. In other embodiments, after the default mapping is completed, each of auxiliary photographing points may be rotated around the reference photographing location point based on an operation performed by the user, or may be moved based on an operation such as a swipe operation performed by the user.

In the related art, in the formation of surveying and mapping points corresponding to an area to be surveyed and mapped, it should be ensured that there should be a preset degree of overlap between a photo taken at one surveying and mapping point and all photos taken at other photographing points at positions horizontally and vertically adjacent to the photo, because mobile surveying and mapping is to be performed in the area to be surveyed and mapped in a traversal manner along parallel lines. As a result, a surveying and mapping photo contains a small amount of information different from that contained in other surveying and mapping photos, and therefore a large number of photos must be taken to complete the surveying and mapping of an area to be surveyed and mapped, and a large amount of work and time is required for synthesis and stitching of the photos in the later stage. In this embodiment, the selected five photographing points in the combined photographing point set are one central photographing point and four peripheral photographing points, it is sufficient as long as it can be ensured that each peripheral photographing point meets the above required degree (e.g., 60% or 70% or the like) of overlap relative to the central photographing point, while each two peripheral photographing points are not required to meet such a high degree of overlap therebetween. This greatly reduces the total number of surveying and mapping photos that need to be taken in the surveying and mapping of an area to be surveyed and mapped having a fixedly size, whereby the time and hardware cost required for synthesis or stitching of the photos in the later stage can be greatly reduced. In particular, if the solution of the embodiment of the present disclosure is applied to a small plot, for example, when a plot can be completely covered after a plurality of photos taken at all the photographing points in a combined photographing point set are combined or stitched, the solution of the embodiment of the present disclosure can be significantly superior to the surveying and mapping at selected points in a traversal manner along parallel lines in relevant techniques, in terms of the number of surveying and mapping points and the difficulty of the stitching in the later stage.

In an optional embodiment of the present disclosure, the obtaining a reference photographing location point corresponding to the area to be surveyed and mapped may include: detecting a touch operation of a user in a human-machine interface, and determining a screen location point according to the touch operation; and obtaining a geographic position coordinate matching the screen location point as the reference photographing location point from map data of the area to be surveyed and mapped currently displayed on the human-machine interface.

In the embodiments of the present disclosure, the reference photographing location point may be determined from a point specified by the user in the human-machine interface. Optionally, a touch operation, such as a clicking or sliding operation or the like, performed by the user in the human-machine interface may be detected, and one of the screen location points in the human-machine interface is determined based on the touch operation performed by the user. Then, a geographic position coordinate matching the screen location point is determined as the reference photographing location point based on map data about the area to be surveyed and mapped that is currently displayed in the human-machine interface. Here, the map data may be latitude and longitude information or the like.

In an optional embodiment of the present disclosure, the detecting a touch operation of a user in a human-machine interface, and determining a screen location point according to the touch operation may include at least one of the following:

determining a touch point of the user as the screen location point if it is detected that the touch operation of the user is a single-point touch operation; selecting a point on a line segment generated by the user's touch as the screen location point if it is detected that the touch operation of the user is a stroke touch operation; and selecting a point inside a box generated by the user's touch as the screen location point if it is detected that the touch operation of the user is a box-drawing touch operation.

In the embodiments of the present disclosure, the determination of a screen location point based on a touch operation performed by a user in the human-machine interface may be specifically implemented in multiple manners. Optionally, a touch point corresponding to a single-point touch operation performed by the user may be determined as the screen location point. A point on a line segment generated by a stroke touch operation performed by the use may also be used as the screen location point. For example, a midpoint of the line segment may be used as the screen location point. A point inside a box generated by a box-drawing touch operation performed by the user may also be used as the screen location point, and for example, a central point of the box may be used as the screen location point.

In an optional embodiment of the present disclosure, the obtaining a reference photographing location point corresponding to the area to be surveyed and mapped may include: obtaining a central point of the area to be surveyed and mapped as the reference photographing location point.

In addition, in the embodiments of the present disclosure, the reference photographing location point may also be automatically generated by a control terminal that controls an unmanned aerial vehicle for surveying and mapping. For example, a central point of the area to be surveyed and mapped where the unmanned aerial vehicle for surveying and mapping is positioned is directly used as the reference photographing location point.

In an optional embodiment of the present disclosure, the obtaining a reference photographing location point corresponding to the area to be surveyed and mapped may further include: obtaining a geographic position coordinate input by a user as the reference photographing location point.

In the embodiments of the present disclosure, the geographic position coordinate input by the user may be directly used as the reference photographing location point. Optionally, the user may input the geographic position coordinate by means of a soft keyboard in the human-machine interface, a numeric keypad in the control terminal, voice input, or the like.

In an optional embodiment of the present disclosure, the obtaining a reference photographing location point corresponding to the area to be surveyed and mapped may include: sending position query information to the unmanned aerial vehicle for surveying and mapping, and using a geographic position coordinate fed back by the unmanned aerial vehicle for surveying and mapping as the reference photographing location point. The unmanned aerial vehicle for surveying and mapping is preset at a position matching the area to be surveyed and mapped.

In the embodiments of the present disclosure, the reference photographing location point may also be determined by position information specified by the user. Optionally, the user may send position query information to the unmanned aerial vehicle for surveying and mapping via the control terminal. For example, the user triggers a set identifier in the human-machine interface of the control terminal to send position query information to the unmanned aerial vehicle for surveying and mapping to query about the current position of the unmanned aerial vehicle for surveying and mapping. After receiving the position query information, the unmanned aerial vehicle for surveying and mapping obtains the current geographic position coordinate via its own positioning apparatus and feeds the current geographic position coordinate back to the control terminal. The control terminal may directly use a location point corresponding to the received geographic position coordinate as the reference photographing location point. Correspondingly, a ground projection point of the unmanned aerial vehicle for surveying and mapping is located inside the area to be surveyed and mapped when the unmanned aerial vehicle for surveying and mapping sends the geographic position coordinate to the control terminal.

In an optional embodiment of the present disclosure, before the sending position query information to the unmanned aerial vehicle for surveying and mapping, the method may further include: receiving at least one flight control instruction for the unmanned aerial vehicle for surveying and mapping input by a user, and sending the flight control instruction to the unmanned aerial vehicle for surveying and mapping; and sending a hovering instruction to the unmanned aerial vehicle for surveying and mapping to control the unmanned aerial vehicle for surveying and mapping to hover at a current position when it is confirmed that a position confirmation response input by the user is received. The flight control instruction is set to control the unmanned aerial vehicle for surveying and mapping to move in air in a set direction and/or by a set distance.

Correspondingly, if the reference photographing location point is determined by position information specified by the user, the user can input at least one flight control instruction for the unmanned aerial vehicle for surveying and mapping to the control terminal. The control terminal sends the flight control instructions input by the user to the unmanned aerial vehicle for surveying and mapping, so that the unmanned aerial vehicle for surveying and mapping can travel according to the flight control instructions. During the travelling of the unmanned aerial vehicle for surveying and mapping, if the user inputs a position confirmation response to the control terminal, for example, the user inputs a stop flight instruction as the position confirmation response, the control terminal may send a hovering instruction to the unmanned aerial vehicle for surveying and mapping to control the unmanned aerial vehicle for surveying and mapping to hover at the current position.

In an optional embodiment of the present disclosure, the establishing a mapping relationship between a photographing point in a combined photographing point set and the reference photographing location point may include: establishing a mapping relationship between a photographing point selected by a user from the combined photographing point set and the reference photographing location point.

Correspondingly, after the reference photographing location point is obtained, the user may arbitrarily select one photographing point from all the photographing points in the combined photographing point set, and a mapping relationship is established between the photographing point selected by the user from the combined photographing point set and the reference photographing location point.

In an optional embodiment of the present disclosure, the establishing a mapping relationship between a photographing point in a combined photographing point set and the reference photographing location point may further include: establishing a mapping relationship between the central photographing point in the combined photographing point set and the reference photographing location point.

In the embodiments of the present disclosure, optionally, a mapping relationship may be established directly between the central photographing point in the combined photographing point set and the reference photographing location point.

In an optional embodiment of the present disclosure, the establishing a mapping relationship between a photographing point in a combined photographing point set and the reference photographing location point may further include: calculating a distance between the reference photographing location point and each of key locating points of the area to be surveyed and mapped, the key locating points including corner points of the area to be surveyed and mapped and a central point of the area to be surveyed and mapped; obtaining one of the key locating points closest to the reference photographing location point as a target reference point; and selecting, according to position information of the target reference point in the area to be surveyed and mapped, a photographing point matching the position information from the combined photographing point set to establish a mapping relationship with the reference photographing location point.

In the embodiments of the present disclosure, optionally, the mapping relationship may also be determined based on a distance relationship between the reference photographing location point and each of key locating points in the area to be surveyed and mapped. Optionally, the corner points of the area to be surveyed and mapped and the central point of the area to be surveyed and mapped are used as the key locating points, a distance between the reference photographing location point and each of the key locating points of the area to be surveyed and mapped is calculated, and a key locating point closest to the reference photographing location point is obtained as a target reference point. Then, based on position information of the target reference point in the area to be surveyed and mapped, one photographing point matching the position information is selected from the combined photographing point set, and a mapping relationship is established between the photographing point and the reference photographing location point. For example, the target reference point is located in the upper left part of the area to be surveyed and mapped, one photographing point at the upper left corner may be selected from the combined photographing point set, and a mapping relationship is established between the photographing point and the reference photographing location point.

Step 312: determining a plurality of auxiliary photographing location points corresponding to the reference photographing location point according to the mapping relationship and a preset relative position relationship between each two photographing points in the combined photographing point set.

The auxiliary photographing location points may be other location points in the area to be surveyed and mapped that are different from the reference photographing location point.

Further, after a mapping relationship between the reference photographing location point and one of the photographing points in the combined photographing point set is determined, a plurality of other auxiliary photographing location points corresponding to the reference photographing location point may be further determined based on the determined mapping relationship and on the preset relative position relationship between each two photographing points in the combined photographing point set.

Exemplarily, assuming that a total of five photographing points are included in the combined photographing point set with a mapping relationship being established between a central photographing point in the photographing point set and the reference photographing location point, the other four auxiliary photographing location points corresponding to the reference photographing location point may be determined based on the position relationships between the other four photographing points and the central photographing point in the combined photographing point set.

Step 313: using the reference photographing location point and the plurality of auxiliary photographing location points as the plurality of sample points for surveying and mapping based on which the unmanned aerial vehicle for surveying and mapping performs surveying and mapping in the area to be surveyed and mapped.

Correspondingly, upon the reference photographing location point and each auxiliary photographing location point are obtained, the reference photographing location point and the auxiliary photographing location points may be used as sample points for surveying and mapping based on which an unmanned aerial vehicle for surveying and mapping performs surveying and mapping in the area to be surveyed and mapped. The unmanned aerial vehicle for surveying and mapping may perform aerial photography based on each of the sample points for surveying and mapping, and send the photos obtained by aerial photography to a corresponding control terminal or ground terminal, so that the control terminal can synthesize the obtained photos to obtain a final surveying and mapping image. Optionally, the unmanned aerial vehicle for surveying and mapping may implement the synthesis of multiple photos locally because the solution of the embodiment of the present disclosure can greatly reduce the number of surveying and mapping photos to be taken.

For the photos obtained corresponding to all the sample points for surveying and mapping obtained by the method for planning sample points for surveying and mapping according to the embodiment of the present disclosure, it is not required that each successive two photos have a certain degree of overlap therebetween, and therefore the time consumed by processing of image data can be greatly reduced.

Step 320: sending the surveying and mapping parameters to the unmanned aerial vehicle for surveying and mapping.

By using the above technical solution, a reference photographing location point corresponding to an area to be surveyed and mapped is obtained, a mapping relationship is established between one photographing point in a combined photographing point set and the reference photographing location point, and at the same time a plurality of auxiliary photographing location points corresponding to the reference photographing location point are determined based on the mapping relationship and the preset relative position relationship between each two photographing points in the combined photographing point set, and then the reference photographing location point and the plurality of auxiliary photographing location points are used as the sample points for surveying and mapping based on which an unmanned aerial vehicle for surveying and mapping performs surveying and mapping in the area to be surveyed and mapped. In this way, a new method for planning sample points for surveying and mapping is proposed, and the existing parallel-line-based mobile planning mode is replaced with an overall planning of multiple surveying and mapping points based on a combined photographing point set, so that the problems of high cost and low surveying and mapping efficiency existing in the existing UAV-based aerial survey methods are solved, and the technical effects of reducing the surveying and mapping cost and improving the surveying and mapping efficiency are achieved.

Fourth Embodiment

FIG. 4a is a flowchart illustrating a surveying and mapping method for a control terminal according to a fourth embodiment of the present disclosure. In this embodiment, another implementation method for determining the surveying and mapping parameters matching the area to be surveyed and mapped is proposed. Correspondingly, as shown in FIG. 4a, the method of this embodiment may include the following steps.

Step 410: determining surveying and mapping parameters matching an area to be surveyed and mapped, the surveying and mapping parameters including a plurality of sample points for surveying and mapping based on which an unmanned aerial vehicle for surveying and mapping performs surveying and mapping in the area to be surveyed and mapped.

Correspondingly, Step 410 may include the following operations.

Step 411: determining one or a plurality of combined photographing areas for surveying and mapping within the area to be surveyed and mapped according to information of the area to be surveyed and mapped and a combined photographing area corresponding to a combined photographing point set.

The combined photographing area may be an area synthesized from the obtained photos after photographing according to each photographing point in the combined photographing point set, that is, the combined photographing area may be an overall photographing area that can be captured by the combined photographing point set. The information of the area to be surveyed and mapped may be related information of the area to be surveyed and mapped, such as the area shape, the area size, or the like of the area to be surveyed and mapped. The combined photographing area for surveying and mapping may be a photographing area having the same size with the combined photographing area. A combined photographing area for surveying and mapping corresponds to an actual photographing range in the plot, that is, the combined photographing area for surveying and mapping includes two key pieces of information, that is, the area size and the geographic position information of the area.

In this embodiment of the present disclosure, before determining the sample points for surveying and mapping of the unmanned aerial vehicle for surveying and mapping, the combined photographing area corresponding to the combined photographing point set is firstly obtained, then one or a plurality of combined photographing areas for surveying and mapping may be determined in the area to be surveyed and mapped according to the information, such as area size and the like, of the combined photographing area and the area to be surveyed and mapped. If there is one combined photographing area for surveying and mapping, the combined photographing area for surveying and mapping can completely cover the area to be surveyed and mapped. If there are a plurality of combined photographing areas for surveying and mapping, the plurality of combined photographing areas for surveying and mapping, after being synthesized, can completely cover the area to be surveyed and mapped. For example, assuming that the combined photographing area is in a shape of square having an area of 10m*10m and the area to be surveyed and mapped is in a shape of rectangle having an area of 10m*20m, at least two combined photographing areas for surveying and mapping can completely cover the area to be surveyed and mapped.

In an optional embodiment of the present disclosure, there is an overlapping area between each two of a plurality of photos taken according to a plurality of photographing points in the combined photographing point set; and/or
there is an overlapping area between each two of the plurality of combined photographing areas for surveying and mapping determined in the area to be surveyed and mapped.

The combined photographing areas for surveying and mapping are photographing areas formed by combining and/or stitching the plurality of photos after obtaining the plurality of photos taken according to the plurality of photographing points in the combined photographing point set; and a surveying and mapping map of the area to be surveyed and mapped is formed by combining and/or stitching each of the plurality of combined photographing areas for surveying and mapping.

It is that the combined photographing area for surveying and mapping is the same as the combined photographing area, but a corresponding relationship between the combined photographing area and the area to be surveyed and mapped is not established. The combined photographing areas for surveying and mapping may be photographing areas formed by dividing the area to be surveyed and mapped, which are independent with each other, and the shape and size of a photographing area is the same as a combined photographing area. The overlapping area between the combined photographing areas for surveying and mapping can be set according to actual needs. For example, the overlapping area occupies 30% or 50% of the combined photographing areas for surveying and mapping. The embodiments of the present disclosure do not limit the numerical value of the overlapping area between the combined photographing areas for surveying and mapping.

In the embodiments of the present disclosure, in order to enable the photos obtained by the unmanned aerial vehicle for surveying and mapping to be stitched together to form a complete image of the area to be surveyed and mapped, optionally, there should be the overlapping area between each two of the plurality of photos taken by the unmanned aerial vehicle for surveying and mapping according to the plurality of photographing points in the combined photographing point set. Correspondingly, after the plurality of photos are taken according to the plurality of photographing points in the combined photographing point set, the plurality of photos may be combined and/or stitched to form a complete combined area. The combined area may completely cover the area to be surveyed and mapped, or may cover only a part of the area to be surveyed and mapped, which is not limited in this embodiment. It should be noted that the overlapping area between the plurality of photos in the embodiments of the present disclosure does not mean that every two consecutive photos have the overlapping area. In the same way, in order to ensure that each photo obtained by the unmanned aerial vehicle for surveying and mapping can be synthesized according to an overlapping part to form a complete image, there should also be an overlapping area between the plurality of combined photographing areas for surveying and mapping determined in the area to be surveyed and mapped. Optionally, there may be an overlapping area between every two adjacent combined photographing areas for surveying and mapping, such that each of the combined photographing areas for surveying and mapping can be combined and/or stitched to form the surveying and mapping information of the area to be surveyed and mapped.

In an optional embodiment of the present disclosure, the determining one or a plurality of combined photographing areas for surveying and mapping within the area to be surveyed and mapped according to information of the area to be surveyed and mapped and a combined photographing area corresponding to a combined photographing point set includes: selecting a locating point in the area to be surveyed and mapped; determining one combined photographing area for surveying and mapping in the area to be surveyed and mapped according to the locating point and the combined photographing area; if the combined photographing area for surveying and mapping fails to completely cover the area to be surveyed and mapped, selecting a new locating point in the area to be surveyed and mapped, and returning to perform an operation of the determining one combined photographing area for surveying and mapping in the area to be surveyed and mapped according to the locating point and the combined photographing area, until all combined photographing areas for surveying and mapping being able to completely cover the area to be surveyed and mapped are determined.

The locating point can be a location point in the area to be surveyed and mapped, and the locating point is set to position the combined photographing areas for surveying and mapping within the area to be surveyed and mapped.

In the embodiments of the present disclosure, the locating point may be a location point selected in the area to be surveyed and mapped according to actual requirements, such as a corner point, a central point, or the like selected from the area to be surveyed and mapped. A locating point can be used to first determine a combined photographing area for surveying and mapping in the area to be surveyed and mapped. For example, if the area to be surveyed and mapped is in a shape of rectangular, a top left vertex of the area to be surveyed and mapped may be selected as the locating point, and when the top left vertex of the combined photographing area coincides with the locating point, the combined photographing area can form a corresponding combined photographing area for surveying and mapping in the area to be surveyed and mapped. It should be noted that when determining a combined photographing area for surveying and mapping within the area to be surveyed and mapped by using the locating point and the combined photographing area, it is necessary to ensure that the combined photographing area for surveying and mapping can cover the area to be surveyed and mapped to the greatest extent. Correspondingly, after performing the determining a combined photographing area for surveying and mapping within the area to be surveyed and mapped by using the locating point and the combined photographing area, it can be determined whether the determined combined photographing area for surveying and mapping can completely cover the area to be surveyed and mapped. If the area to be surveyed and mapped can be completely covered, there is no need to determine other combined photographing areas for surveying and mapping. If the combined photographing area for surveying and mapping cannot completely cover the area to be surveyed and mapped, a new locating point should be selected from the area to be surveyed and mapped, and it is necessary to return to perform the operation of the determining a combined photographing area for surveying and mapping within the area to be surveyed and mapped by using the locating point and the combined photographing area, until all of the combined photographing areas for surveying and mapping which can completely cover the area to be surveyed and mapped are determined. It should be noted that when reselecting a new locating point, it should be noted that there is an overlapping area between the combined photographing area for surveying and mapping determined by the new locating point and an adjacent combined photographing area for surveying and mapping.

In an optional embodiment of the present disclosure, before performing the determining one or a plurality of combined photographing areas for surveying and mapping within the area to be surveyed and mapped according to information of the area to be surveyed and mapped and a combined photographing area corresponding to a combined photographing point set, the surveying and mapping method for a control terminal further includes: detecting a touch operation of a user in a human-machine interface and obtaining a screen selection area matching the touch operation; and obtaining a geographic position area matching the screen selection area as the information of the area to be surveyed and mapped from map data currently displayed on the human-machine interface.

The screen selection area may be an area formed by the touch operation of the user in the human-machine interface of the control terminal of the unmanned aerial vehicle for surveying and mapping, the screen selection area may be an area of any shape and size (not exceeding the size of the screen), and the shape and size of the screen selection area are not limited in the embodiments of the present disclosure.

In the embodiments of the present disclosure, the area to be surveyed and mapped may be designated and generated in real time by the user who controls the unmanned aerial vehicle for surveying and mapping. For example, by detecting the touch operation of the user in the human-machine interface to obtain the screen selection area matching the touch operation, and determining a matching geographic position area for the screen selection area according to the map data currently displayed in the human-machine interface, the determined geographic position area is taken as the information of the area to be surveyed and mapped.

In an optional embodiment of the present disclosure, the detecting a touch operation of a user in a human-machine interface and obtaining a screen selection area matching the touch operation may include the following:

> determining a closed area enclosed by connection lines of at least three touch points of the user as the screen selection area if it is detected that the touch operation of the user is a single-point touch operation; and/or
> using a box generated by the user's touch as the screen selection area if it is detected that the touch operation of the user is a box-drawing touch operation.

Optionally, a closed area formed by the detected single-point touch operation of the user may be used as the screen selection area matching the touch operation. For example, a closed area enclosed by connection lines of at least three touch points of the user is determined as the screen selection area. Further, the box generated by the detected box-drawing touch operation of the user can be used as the screen selection area.

Step 412: determining a plurality of photographing location points in the combined photographing area for surveying and mapping according to a preset relative position relationship between each two photographing points in the combined photographing point set.

The photographing location point is a location point in the area to be surveyed and mapped, which has a matching geographic position coordinate.

In the embodiments of the present disclosure, the photographing location point may be determined according to the preset relative position relationship between each two photographing points in the combined photographing point set.

In an optional embodiment of the present disclosure, the determining a plurality of photographing location points in the combined photographing area for surveying and mapping according to a preset relative position relationship between each two photographing points in the combined photographing point set includes: mapping the central photographing point in the combined photographing point set to an area midpoint of the combined photographing area for surveying and mapping, and using the area midpoint as one photographing location point; and mapping, according to a preset relative position relationship between each of the peripheral photographing points in the combined photographing point set and the central photographing point, each of the peripheral photographing points respectively to the combined photographing area for surveying and mapping to form a plurality of mapping points, and using the plurality of mapping points as the photographing location points.

In the embodiments of the present disclosure, since one combined photographing area for surveying and mapping corresponds to one combined photographing area, when determining the photographing location points, each photographing point in the combined photographing point set corresponding to the combined photographing area can be mapped to the combined photographing area for surveying and mapping to be used as a photographing location point. Optionally, during the mapping, the central photographing point in the combined photographing point set may be first mapped to an area midpoint of the combined photographing area for surveying and mapping, such that the area midpoint of the combined photographing area for surveying and mapping can be used as one photographing location point.

Further, after determining the area midpoint of the combined photographing area for surveying and mapping as one photographing location point, according to the relative position relationship between each of the peripheral photographing points and the central photographing point in the combined photographing point set, each of the peripheral photographing points is respectively mapped to the combined photographing area for surveying and mapping to form a plurality of mapping points, and the plurality of mapping points are used as the photographing location points.

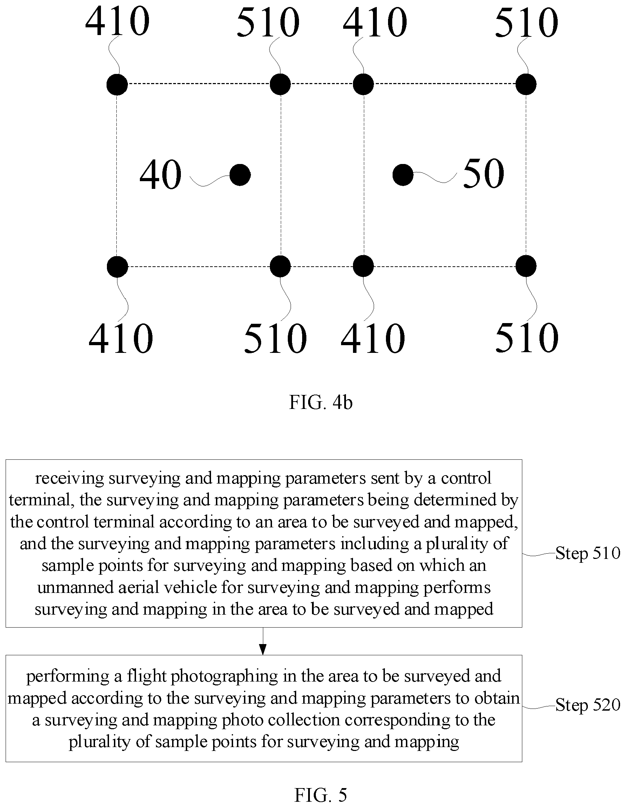

FIG. 4b is a schematic diagram illustrating a distribution of each photographing location point according to the fourth embodiment of the present disclosure. In an optional embodiment, as shown in Figure 4b, the two central points 40 and 50 are respectively the area midpoints of the combined photographing areas for surveying and mapping. Correspondingly, the area midpoint 40 and four peripheral photographing location points 410 are located in one combined photographing area for surveying and mapping, and the area midpoint 50 and four peripheral photographing location points 510 are located in another combined photographing area for surveying and mapping. The relative position relationship between the area midpoint and the peripheral photographing location points in the two combined photographing areas for surveying and mapping is the same as the preset relative position relationship between each peripheral photographing point and the central photographing point in the combined photographing point set.

Step 413: using the plurality of photographing location points as the plurality of sample points for surveying and mapping based on which the unmanned aerial vehicle for surveying and mapping performs surveying and mapping in the area to be surveyed and mapped.

Correspondingly, upon the photographing location points are obtained, the photographing location points may be used as sample points for surveying and mapping based on which an unmanned aerial vehicle for surveying and mapping performs surveying and mapping in the area to be surveyed and mapped. The unmanned aerial vehicle for surveying and mapping may perform aerial photography based on each of the sample points for surveying and mapping, and send the photos obtained by aerial photography to a corresponding control terminal or ground terminal, so that the control terminal can synthesize the obtained photos to obtain a final surveying and mapping image. Optionally, the unmanned aerial vehicle for surveying and mapping may implement the synthesis of multiple photos locally because the solution of the embodiment of the present disclosure can greatly reduce the number of surveying and mapping photos to be taken.

Step 420: sending the surveying and mapping parameters to the unmanned aerial vehicle for surveying and mapping.

In an optional embodiment of the present disclosure, before the sending the surveying and mapping parameters to the unmanned aerial vehicle for surveying and mapping, the surveying and mapping method for a control terminal further includes: obtaining photographing parameters of a photographing apparatus carried by the unmanned aerial vehicle for surveying and mapping, the photographing parameters including single-photo photographing areas of the unmanned aerial vehicle for surveying and mapping at a set flight altitude, and each photographing point being corresponding to one of the single-photo photographing areas; and determining the preset relative position relationship between each two photographing points in the combined photographing point set according to a preset photo overlap degree index and the single-photo photographing areas. The surveying and mapping parameters further include the set flight altitude, and the set flight altitude is set to instruct the unmanned aerial vehicle for surveying and mapping to perform a flight photographing in the area to be surveyed and mapped at the set flight altitude. Before the obtaining photographing parameters of a photographing apparatus carried by the unmanned aerial vehicle for surveying and mapping, the surveying and mapping method for a control terminal further includes: calculating the set flight altitude according to a pixel width of the photographing apparatus, lens focal length of the photographing apparatus, and a ground pixel resolution.

A single-photo photographing area is an actual area to be surveyed and mapped that can be captured by a single photo. The preset photo overlap degree index may be an overlap degree index set based on an actual requirement, such as 50%, 60%, 70%, or the like. Although the numerical value of the preset photo overlap degree index is not limited in the embodiment of the present disclosure, it should be noted that the preset photo overlap degree index should meet the requirement that a complete rectangle can be formed when all the photos are synthesized according to overlapping portions.

In the embodiment of the present disclosure, since it is necessary to synthesize the photos obtained by the unmanned aerial vehicle for surveying and mapping to obtain a final surveying and mapping image, it is necessary to determine a single-photo photographing area of the unmanned aerial vehicle for surveying and mapping at the set flight altitude, so as to determine the preset relative position relationship between each two photographing points in the combined photographing point set based on the size of a single photo photographing area. Each photographing point is corresponding to a single-photo photographing area, and for example, the photographing point is the midpoint or one of the vertices of the single-photo photographing area. The preset relative position relationship between each two photographing points in the combined photographing point set can be determined according to the preset photo overlap degree index and the single-photo photographing areas.

The surveying and mapping parameters of the embodiments of the present disclosure further include the set flight altitude, and the set flight altitude is set to instruct the unmanned aerial vehicle for surveying and mapping to perform a flight photographing in the area to be surveyed and mapped at the set flight altitude. It can be understood that when a photographing apparatus such as a camera of the unmanned aerial vehicle for surveying and mapping has fixed photographing parameters, the flight altitude of the unmanned aerial vehicle for surveying and mapping directly influences the ground pixel resolution. The ground pixel resolution, in turn, directly determines an area of the area to be surveyed and mapped that can be covered by a single photo. Therefore, before the area to be surveyed and mapped is aerially photographed by using the unmanned aerial vehicle for surveying and mapping, the set flight altitude of the unmanned aerial vehicle for surveying and mapping should be first determined. The set flight altitude of the unmanned aerial vehicle for surveying and mapping may be calculated based on the pixel width of the photographing apparatus, the lens focal length of the photographing apparatus, and the ground pixel resolution. Optionally, a formula where the flight altitude = the ground pixel resolution * the lens focal length / the pixel width may be obtained from a formula where the ground pixel resolution = the flight altitude * the pixel width / the lens focal length. The pixel width = a width dimension of a sensor of the photographing apparatus / a frame width.

In an optional embodiment of the present disclosure, the obtaining photographing parameters of a photographing apparatus carried by the unmanned aerial vehicle for surveying and mapping includes: calculating the single-photo photographing areas of the unmanned aerial vehicle for surveying and mapping at the set flight altitude according to a pixel width of the photographing apparatus, a frame size of the photographing apparatus, and a ground pixel resolution.

In the embodiments of the present disclosure, further, the single-photo photographing area of the unmanned aerial vehicle for surveying and mapping at the set flight altitude may be calculated based on the pixel width of the photographing apparatus, a frame size of the photographing apparatus, and the ground pixel resolution. Optionally, the single-photo photographing area = the ground pixel resolution * the frame size, and the ground pixel resolution = the flight altitude * the pixel width / the lens focal length.

Namely, a length photographable in a single photo = the ground pixel resolution * the frame length; and a width photographable in a single photo = the ground pixel resolution * the frame width. For example, if the frame size is 3456 * 4608 and the ground pixel resolution is 0.05 m, the single-photo photographing area is 172.8 m * 230.4 m.

In an optional embodiment of the present disclosure, the determining the preset relative position relationship between each two photographing points in the combined photographing point set according to a preset photo overlap degree index and the single-photo photographing areas includes: determining a size of a single photo according to a frame size and a pixel width of the photographing apparatus; constructing a two-dimensional coordinate system, and selecting a target point in the two-dimensional coordinate system as the central photographing point; generating a central photo in the two-dimensional coordinate system according to the central photographing point and the size of a single photo; generating four peripheral photos matching the preset photo overlap degree index with the central photo at an upper left corner, a lower left corner, an upper right corner, and a lower right corner of the central photo, respectively; determining a coordinate value of a peripheral photographing point corresponding to each of the four peripheral photos in the two-dimensional coordinate system according to a mapping relationship between the size of a single photo and the single-photo photographing areas; and determining the preset relative position relationship between each two photographing points in the combined photographing point set according to coordinate values of the central photographing point and each peripheral photographing point in the two-dimensional coordinate system.

The target point may be any point in the two-dimensional coordinate system. For example, the target point may be the origin of the two-dimensional coordinate system.

Optionally, in the determination of the preset relative position relationships between each two photographing points in the combined photographing point set, a size of a single photo may be first determined based on the frame size of the photographing apparatus and the pixel width of the photographing apparatus. Here, the size of a single photo = frame size * pixel width (namely, a single-photo length = frame length * pixel width; and a single photo width = frame width * pixel width). Then, a target point is selected in the two-dimensional coordinate system as the central photographing point of the combined photographing point set. Further, a central photo is generated in the two-dimensional coordinate system based on the central photographing point and the size of a single photo. For example, a corresponding central photo is generated using the central photographing point as the central point of the central photo and based on the size of a single photo. Then, based on the size of a single photo and the preset photo overlap degree index, four peripheral photos matching the central photo may be generated respectively in four orientations, i.e., the upper left corner, the lower left corner, the upper right corner, and the lower right corner of the central photo. It should be noted that each of the central photo and the four peripheral photos matching therewith is not a photo taken in real sense, but is a rectangular region with the same size and shape as a single photo. Correspondingly, after the central photo and the four peripheral photos matching therewith are obtained, a coordinate value of respective peripheral photographing points corresponding to each peripheral photo in the two-dimensional coordinate system may be determined based on a mapping relationship between the size of a single photo and the single-photo photographing area. For example, if the size of a single photo is 10 cm * 10 cm, the preset photo overlap degree index is 50%, the peripheral photos corresponding to the upper left corner, the lower left corner, the upper right corner, and the lower right corner are respectively corresponding to single-photo photographing areas at the upper left corner, the lower left corner, the upper right corner, and the lower right corner, and a mapping relationship between the size of a single photo and the single-photo photographing area is 1:200, then the single-photo photographing area is correspondingly 20 m * 20 m. If the central points of the peripheral photos are used as the respective peripheral photographing points and the coordinate origin is used as the central photographing point, the respective peripheral photographing points may have coordinate values of (-10, 10), (-10, -10), (10, 10), and (10, -10) in unit of m, respectively. Correspondingly, upon the respective coordinate value corresponding to each peripheral photographing point is obtained, the preset relative position relationships between each two photographing points in the combined photographing point set may be determined based on the coordinate values of the central photographing point and all the peripheral photographing points in the two-dimensional coordinate system. For example, in the above example, there is a relative distance of 20 m between the peripheral photographing points located at the individual vertices in the combined photographing point set, and there is a relative distance of $10\sqrt{2}$ m between the central photographing point at the central point and each peripheral photographing point.

In the above technical solutions, a combined photographing area corresponding to a combined photographing point set is obtained, one or a plurality of combined photographing areas for surveying and mapping within the area to be surveyed and mapped are determined according to the information of the area to be surveyed and mapped and a combined photographing area, then a plurality of photographing location points in the combined photographing area for surveying and mapping are determined according to a preset relative position relationship between each two photographing points in the combined photographing point set, and the plurality of photographing location points are used as the plurality of sample points for surveying and mapping based on which the unmanned aerial vehicle for surveying and mapping performs surveying and mapping in the area to be surveyed and mapped. In this way, a new method for planning sample points for surveying and mapping is proposed, and the existing parallel-line-based mobile planning mode is replaced with an overall planning of multiple surveying and mapping points based on a combined photographing point set, so that the problems of high cost and low surveying and mapping efficiency existing in the existing UAV-based aerial survey methods are solved, and the technical effects of reducing the surveying and mapping cost and improving the surveying and mapping efficiency are achieved.

Fifth Embodiment

FIG. 5 is a flowchart illustrating a surveying and mapping method for an unmanned aerial vehicle for surveying and mapping according to a fifth embodiment of the present disclosure. This embodiment is applicable to a case of obtaining a surveying and mapping photo collection corresponding to a plurality of sample points for surveying and mapping. The method may be executed by a surveying and mapping device for an unmanned aerial vehicle for surveying and mapping, this device may be implemented by means of software and/or hardware, and may generally be integrated in an unmanned aerial vehicle apparatus, and used in cooperation with a control terminal that is responsible for controlling the unmanned aerial vehicle. Correspondingly, as shown in Figure 5, the method includes the following operations.

Step 510: receiving surveying and mapping parameters sent by a control terminal, the surveying and mapping parameters being determined by the control terminal according to an area to be surveyed and mapped, and the surveying and mapping parameters including a plurality of sample points for surveying and mapping based on which an unmanned aerial vehicle for surveying and mapping performs surveying and mapping in the area to be surveyed and mapped.

In the embodiments of the present disclosure, after determining the surveying and mapping parameters matching the area to be surveyed and mapped, that is, a plurality of sample points for surveying and mapping based on which an unmanned aerial vehicle for surveying and mapping performs surveying and mapping in the area to be surveyed and mapped, the control terminal may send the plurality of sample points for surveying and mapping to the unmanned aerial vehicle for surveying and mapping.

In an optional embodiment of the present disclosure, before the receiving surveying and mapping parameters sent by a control terminal, the surveying and mapping method for an unmanned aerial vehicle for surveying and mapping further includes: receiving at least one flight control instruction sent by the control terminal, and performing at least one of the following in air according to the flight control instruction: moving in a set direction and moving by a set distance; hovering at a current position according to a hovering instruction sent by the control terminal; and feeding a geographic position coordinate of the current position back to the control terminal according to position query information sent by the control terminal, the geographic position coordinate being determined by the control terminal as a reference photographing location point.

In the embodiments of the present disclosure, if the control terminal determines the reference photographing location point by position information specified by the user, the user may input at least one flight control instruction for the unmanned aerial vehicle for surveying and mapping to the control terminal. The control terminal sends the flight control instructions input by the user to the unmanned aerial vehicle for surveying and mapping, so that the unmanned aerial vehicle for surveying and mapping can travel according to the flight control instructions, that is, the unmanned aerial vehicle performs at least one of the following in the air: moving in a set direction and moving by a set distance. During the travelling of the unmanned aerial vehicle for surveying and mapping, if the user inputs a position confirmation response to the control terminal, for example, the user inputs a stop flight instruction as the position confirmation response, the control terminal may send a hovering instruction to the unmanned aerial vehicle for surveying and mapping to control the unmanned aerial vehicle for surveying and mapping to hover at the current position. Simultaneously, the control terminal sends the position query information to the unmanned aerial vehicle for surveying and mapping, the unmanned aerial vehicle for surveying and mapping may feed a geographic position coordinate of the current position back to the control terminal. The control terminal can use the geographic position coordinate fed back by the unmanned aerial vehicle for surveying and mapping as the reference photographing location point.

Step 520: performing a flight photographing in the area to be surveyed and mapped according to the surveying and mapping parameters to obtain a surveying and mapping photo collection corresponding to the plurality of sample points for surveying and mapping.

In the embodiments of the present disclosure, the unmanned aerial vehicle for surveying and mapping may perform the flight photographing in the area to be surveyed and mapped according to the surveying and mapping parameters including the plurality of sample points for surveying and mapping send by the control terminal to obtain the surveying and mapping photo collection corresponding to the plurality of sample points for surveying and mapping.

In an optional embodiment of the present disclosure, the surveying and mapping parameters further include a set flight altitude, and the performing a flight photographing in the area to be surveyed and mapped according to the surveying and mapping parameters to obtain a surveying and mapping photo collection corresponding to the plurality of sample points for surveying and mapping includes: performing the flight photographing in the area to be surveyed and mapped at the set flight altitude according to the surveying and mapping parameters to obtain the surveying and mapping photo collection corresponding to the plurality of sample points for surveying and mapping.

The surveying and mapping parameters of the embodiments of the present disclosure further include the set flight altitude, and the set flight altitude is set to instruct the unmanned aerial vehicle for surveying and mapping to perform a flight photographing in the area to be surveyed and mapped at the set flight altitude, such that the surveying and mapping photo collection corresponding to the plurality of sample points for surveying and mapping can be obtained.

In an optional embodiment of the present disclosure, the performing a flight photographing in the area to be surveyed and mapped according to the surveying and mapping parameters to obtain a surveying and mapping photo collection corresponding to the plurality of sample points for surveying and mapping includes: obtaining, when it is determined to fly to each of the plurality of sample points for surveying and mapping according to geographic position information of each of the plurality of sample points for surveying and mapping, surveying and mapping photos respectively corresponding to each of the plurality of sample points for surveying and mapping by photographing to form the surveying and mapping photo collection.

Correspondingly, after obtaining the sample points for surveying and mapping, the unmanned aerial vehicle for surveying and mapping may fly to each of the plurality of sample points for surveying and mapping according to the geographic position information of each of the plurality of sample points for surveying and mapping. Each time the unmanned aerial vehicle for surveying and mapping reaches a sample point for surveying and mapping, it can control a photographing apparatus to perform photographing, so that the surveying and mapping photos respectively corresponding to each of the plurality of sample points for surveying and mapping may be obtained to form the surveying and mapping photo collection.

In an optional embodiment of the present disclosure, after the performing a flight photographing in the area to be surveyed and mapped according to the surveying and mapping parameters to obtain a surveying and mapping photo collection corresponding to the plurality of sample points for surveying and mapping, the surveying and mapping method for an unmanned aerial vehicle for surveying and mapping further includes at least one of the following: sending each surveying and mapping photo in the surveying and mapping photo collection back to a ground terminal respectively according to a photographing sequence; and storing each surveying and mapping photo in the surveying and mapping photo collection in a built-in memory card according to a photographing sequence.

In the embodiments of the present disclosure, each surveying and mapping photo in the surveying and mapping photo collection may be sent back to a ground terminal respectively by the unmanned aerial vehicle for surveying and mapping according to a photographing sequence, such that the ground terminal can perform at least one of photo combination and photo stitching on a plurality of photos of the surveying and mapping photo collection; or each surveying and mapping photo in the surveying and mapping photo collection may be stored in a built-in memory card by the unmanned aerial vehicle for surveying and mapping according to a photographing sequence, such that the photo data in the memory card may be uniformly sent to the ground terminal, or the unmanned aerial vehicle for surveying and mapping may perform at least one of photo combination and photo stitching on each surveying and mapping photo in the surveying and mapping photo collection.

In the embodiments of the present disclosure, by receiving a plurality of sample points for surveying and mapping based on which the surveying and mapping is performed in the area to be surveyed and mapped, and sent by the control terminal, a flight photographing is performed in the area to be surveyed and mapped according to the sample points for surveying and mapping, and then a surveying and mapping photo collection corresponding to the plurality of sample points for surveying and mapping is obtained. In this way, a new method for obtaining a surveying and mapping photo collection corresponding to the sample points for surveying and mapping is proposed, and the existing parallel-line-based mobile planning mode is replaced with an overall planning of multiple sample points for surveying and mapping, so that the problems of high cost and low surveying and mapping efficiency existing in the existing UAV-based aerial survey methods are solved, and the technical effects of reducing the surveying and mapping cost and improving the surveying and mapping efficiency are achieved.

Sixth Embodiment

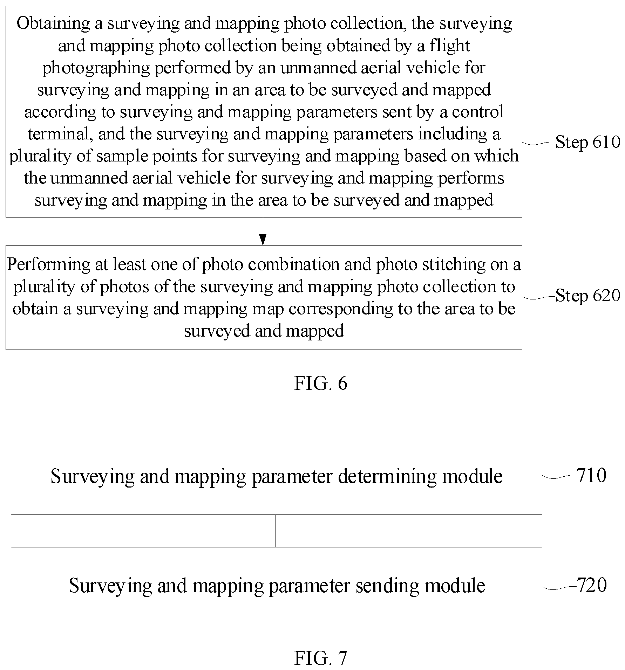

FIG. 6 is a flowchart illustrating a surveying and mapping method for a ground terminal according to a sixth embodiment of the present disclosure. This embodiment is applicable to a case of obtaining the surveying and mapping map corresponding to the area to be surveyed and mapped according to a surveying and mapping photo collection. This method can be executed by a surveying and mapping device for a ground terminal, this device may be implemented by means of software and/or hardware, and may generally be integrated in a terminal apparatus, and used in cooperation with an unmanned aerial vehicle for surveying and mapping that is responsible for aerial photography. Correspondingly, as shown in Figure 6, the method includes the following operations.

Step 610: obtaining a surveying and mapping photo collection, the surveying and mapping photo collection being obtained by a flight photographing performed by an unmanned aerial vehicle for surveying and mapping in an area to be surveyed and mapped according to surveying and mapping parameters sent by a control terminal, and the surveying and mapping parameters including a plurality of sample points for surveying and mapping based on which the unmanned aerial vehicle for surveying and mapping performs surveying and mapping in the area to be surveyed and mapped.

In the embodiments of the present disclosure, the surveying and mapping photo collection obtained by the unmanned aerial vehicle for surveying and mapping is received by the ground terminal. The surveying and mapping photo collection is obtained by a flight photographing performed by an unmanned aerial vehicle for surveying and mapping in an area to be surveyed and mapped according to the plurality of sample points for surveying and mapping sent by a control terminal.

Step 620: performing at least one of photo combination and photo stitching on a plurality of photos of the surveying and mapping photo collection to obtain a surveying and mapping map corresponding to the area to be surveyed and mapped.

Correspondingly, after receiving the surveying and mapping photo collection, the ground terminal may perform at least one of the photo combination and the photo stitching on the plurality of photos of the surveying and mapping photo collection, such that a complete surveying and mapping map corresponding to the area to be surveyed and mapped is obtained.

In an optional embodiment of the present disclosure, the performing at least one of photo combination and photo stitching on a plurality of photos of the surveying and mapping photo collection to obtain a surveying and mapping map corresponding to the area to be surveyed and mapped includes: obtaining, in the surveying and mapping photo collection, a central surveying and mapping photo taken at at least one central photographing point and peripheral surveying and mapping photos taken at a plurality of peripheral photographing points associated with each of the at least one central photographing point; stitching each central surveying and mapping photo and corresponding peripheral surveying and mapping photos into a combined photographing photo according to a degree of photo overlap between each of the peripheral surveying and mapping photos and corresponding central surveying and mapping photo; and obtaining the surveying and mapping map corresponding to the area to be surveyed and mapped according to the combined photographing photo corresponding to each of the at least one central photographing point.

Optionally, the ground terminal can obtain, in the surveying and mapping photo collection, a central surveying and mapping photo taken at at least one central photographing point and peripheral surveying and mapping photos taken at a plurality of peripheral photographing points associated with each of the at least one central photographing point, and stitch each central surveying and mapping photo and corresponding peripheral surveying and mapping photos to form a combined photographing photo according to a degree of photo overlap between each of the peripheral surveying and mapping photos and corresponding central surveying and mapping photo. It can be seen that, in the embodiments of the present disclosure, when stitching photos obtained by the unmanned aerial vehicle for surveying and mapping, the stitching is not performed according to the degree of photo overlap between every two consecutive photos. Therefore, processing time of image data can be greatly reduced, and efficiency of surveying and mapping is improved. Correspondingly, if one combined photographing photo is formed by stitching the central surveying and mapping photo and corresponding peripheral surveying and mapping photos, the combined photographing photo is a surveying and mapping map corresponding to the surveying and mapping area; if a plurality of combined photographing photos are formed by stitching the central surveying and mapping photos and corresponding peripheral surveying and mapping photos, then after the plurality of combined photographing photos are stitched according to a certain degree of overlap, a final combined photographing photo obtained is a surveying and mapping map corresponding to the surveying and mapping area.

In an optional embodiment of the present disclosure, the surveying and mapping map of the area to be surveyed and mapped includes at least one of the following: a digital surface model of the area to be surveyed and mapped, a three-dimensional map of the area to be surveyed and mapped, and a plane map of the area to be surveyed and mapped.

In the embodiments of the present disclosure, optionally, the surveying and mapping map corresponding to the area to be surveyed and mapped obtained according to performing at least one of photo combination and photo stitching on a plurality of photos of the surveying and mapping photo collection may be a digital surface model corresponding to the area to be surveyed and mapped, a three-dimensional map of the area to be surveyed and mapped, and a plane map of the area to be surveyed and mapped.

In the embodiments of the present disclosure, by obtaining a surveying and mapping photo collection obtained by a flight photographing performed by an unmanned aerial vehicle for surveying and mapping in an area to be surveyed and mapped according to surveying and mapping parameters sent by a control terminal, and performing at least one of photo combination and photo stitching on a plurality of photos of the surveying and mapping photo collection, a surveying and mapping map corresponding to the area to be surveyed and mapped can be obtained. The surveying and mapping parameters include a plurality of sample points for surveying and mapping based on which the unmanned aerial vehicle for surveying and mapping performs surveying and mapping in the area to be surveyed and mapped. In this way, a new method for obtaining a surveying and mapping map corresponding to the area to be surveyed and mapped is proposed, and the existing parallel-line-based mobile planning mode is replaced with an overall planning of multiple sample points for surveying and mapping, so that the problems of high cost and low surveying and mapping efficiency existing in the existing UAV-based aerial survey methods are solved, and the technical effects of reducing the surveying and mapping cost and improving the surveying and mapping efficiency are achieved.

Seventh Embodiment

FIG. 7 is a schematic diagram illustrating a surveying and mapping device for a control terminal according to a seventh embodiment of the present disclosure, as shown in FIG. 7, the device includes a surveying and mapping parameter determining module 710 and a surveying and mapping parameter sending module 720.

The surveying and mapping parameter determining module 710 is configured to determine surveying and mapping parameters matching an area to be surveyed and mapped. The surveying and mapping parameters include a plurality of sample points for surveying and mapping based on which an unmanned aerial vehicle for surveying and mapping performs surveying and mapping in the area to be surveyed and mapped.

The surveying and mapping parameter sending module 720 is configured to send the surveying and mapping parameters to the unmanned aerial vehicle for surveying and mapping.

In the technical solution of this embodiment, the control terminal is used to determine the plurality of sample points for surveying and mapping based on which the unmanned aerial vehicle for surveying and mapping performs surveying and mapping in the area to be surveyed and mapped and send the surveying and mapping parameters to the unmanned aerial vehicle for surveying and mapping. In this way, a new method for determining sample points for surveying and mapping is proposed. The existing parallel-line-based mobile planning mode is replaced with an overall planning of the plurality of sample points for surveying and mapping, so that the problems of high cost and low surveying and mapping efficiency existing in the existing UAV-based aerial survey methods are solved, and the technical effects of reducing the surveying and mapping cost and improving the surveying and mapping efficiency are achieved.

Optionally, the surveying and mapping parameter determining module 710 includes: a photographing location point obtaining unit, configured to obtain a reference photographing location point corresponding to the area to be surveyed and mapped, and establish a mapping relationship between a photographing point in a combined photographing point set and the reference photographing location point; an auxiliary photographing location point determining unit, configured to determine a plurality of auxiliary photographing location points corresponding to the reference photographing location point according to the mapping relationship and a preset relative position relationship between each two photographing points in the combined photographing point set; and a first sample point for surveying and mapping determining unit, configured to use the reference photographing location point and the plurality of auxiliary photographing location points as the plurality of sample points for surveying and mapping based on which the unmanned aerial vehicle for surveying and mapping performs surveying and mapping in the area to be surveyed and mapped.

Optionally, the surveying and mapping parameter determining module 710 includes: a combined photographing area for surveying and mapping determining unit, configured to determine one or a plurality of combined photographing areas for surveying and mapping within the area to be surveyed and mapped according to information of the area to be surveyed and mapped and a combined photographing area corresponding to a combined photographing point set; a photographing location point determining unit, configured to determine a plurality of photographing location points in the combined photographing area for surveying and mapping according to a preset relative position relationship between each two photographing points in the combined photographing point set; and a second sample point for surveying and mapping determining unit, configured to use the plurality of photographing location points as the plurality of sample points for surveying and mapping based on which the unmanned aerial vehicle for surveying and mapping performs surveying and mapping in the area to be surveyed and mapped.

Optionally, there is an overlapping area between each two of a plurality of photos taken according to a plurality of photographing points in the combined photographing point set; and/or there is an overlapping area between each two of a plurality of combined photographing areas for surveying and mapping determined in the area to be surveyed and mapped. The combined photographing areas for surveying and mapping are photographing areas formed by combining and/or stitching the plurality of photos after obtaining the plurality of photos taken according to the plurality of photographing points in the combined photographing point set; and a surveying and mapping map of the area to be surveyed and mapped is formed by combining and/or stitching each of the plurality of combined photographing areas for surveying and mapping.

Optionally, the photographing points in the combined photographing point set include a central photographing point and four peripheral photographing points, and the four peripheral photographing points are four vertices of a rectangle centered on the central photographing point, respectively. A composite photo obtained by photographing based on all the photographing points in the combined photographing point set is of a rectangular shape.

Optionally, the photographing location point obtaining unit is configured to detect a touch operation of a user in a human-machine interface, determine a screen location point according to the touch operation, and obtain a geographic position coordinate matching the screen location point as the reference photographing location point from map data of the area to be surveyed and mapped currently displayed on the human-machine interface.

Optionally, the photographing location point obtaining unit is configured to: determining a touch point of the user as the screen location point if it is detected that the touch operation of the user is a single-point touch operation;

selecting a point on a line segment generated by the user's touch as the screen location point if it is detected that the touch operation of the user is a stroke touch operation; and
selecting a point inside a box generated by the user's touch as the screen location point if it is detected that the touch operation of the user is a box-drawing touch operation.

Optionally, the photographing location point obtaining unit is configured to obtain a central point of the area to be surveyed and mapped as the reference photographing location point.

Optionally, the photographing location point obtaining unit is configured to send position query information to the unmanned aerial vehicle for surveying and mapping, and use a geographic position coordinate fed back by the unmanned aerial vehicle for surveying and mapping as the reference photographing location point. The unmanned aerial vehicle for surveying and mapping is preset at a position matching the area to be surveyed and mapped.

Optionally, the device further includes: a flight control instruction sending module, configured to receive at least one flight control instruction for the unmanned aerial vehicle for surveying and mapping input by a user, and send the flight control instruction to the unmanned aerial vehicle for surveying and mapping; and a hovering instruction sending module, configured to send a hovering instruction to the unmanned aerial vehicle for surveying and mapping to control the unmanned aerial vehicle for surveying and mapping to hover at a current position when it is confirmed that a position confirmation response input by the user is received. The flight control instruction is set to control the unmanned aerial vehicle for surveying and mapping to perform at least one of the following in air: moving in a set direction and moving by a set distance.

Optionally, the photographing location point obtaining unit is configured to obtain a geographic position coordinate input by a user as the reference photographing location point.

Optionally, the photographing location point obtaining unit is configured to establish a mapping relationship between a photographing point selected by a user from the combined photographing point set and the reference photographing location point.

Optionally, the photographing location point obtaining unit is configured to establish a mapping relationship between the central photographing point in the combined photographing point set and the reference photographing location point.

Optionally, the photographing location point obtaining unit is configured to: calculate a distance between the reference photographing location point and each of key locating points of the area to be surveyed and mapped, the key locating points including corner points of the area to be surveyed and mapped and a central point of the area to be surveyed and mapped; obtain one of the key locating points closest to the reference photographing location point as a target reference point; and select, according to position information of the target reference point in the area to be surveyed and mapped, a photographing point matching the position information from the combined photographing point set to establish a mapping relationship with the reference photographing location point.

Optionally, the combined photographing area for surveying and mapping determining unit is configured to: select a locating point in the area to be surveyed and mapped; determine one combined photographing area for surveying and mapping in the area to be surveyed and mapped according to the locating point and the combined photographing area; and if the combined photographing area for surveying and mapping fails to completely cover the area to be surveyed and mapped, select a new locating point in the area to be surveyed and mapped, and return to perform an operation of the determining one combined photographing area for surveying and mapping in the area to be surveyed and mapped according to the locating point and the combined photographing area, until all combined photographing areas for surveying and mapping being able to completely cover the area to be surveyed and mapped are determined.

Optionally, the photographing location point determining unit is configured to: map the central photographing point in the combined photographing point set to an area midpoint of the combined photographing area for surveying and mapping, and use the area midpoint as one photographing location point; and map, according to a preset relative position relationship between each of the peripheral photographing points in the combined photographing point set and the central photographing point, each of the peripheral photographing points respectively to the combined photographing area for surveying and mapping to form a plurality of mapping points, and use the plurality of mapping points as the photographing location points.

Optionally, the device further includes: a screen selection area obtaining module, configured to detect a touch operation of a user in a human-machine interface and obtain a screen selection area matching the touch operation; and a module for obtaining information of an area to be surveyed and mapped, configured to obtain a geographic position area matching the screen selection area as the information of the area to be surveyed and mapped from map data currently displayed on the human-machine interface.

Optionally, the screen selection area obtaining module is configured to: determine a closed area enclosed by connection lines of at least three touch points of the user as the screen selection area if it is detected that the touch operation of the user is a single-point touch operation; and/or

use a box generated by the user's touch as the screen selection area if it is detected that the touch operation of the user is a box-drawing touch operation.

Optionally, the device further includes: a photographing parameter obtaining module, configured to obtain photographing parameters of a photographing apparatus carried by the unmanned aerial vehicle for surveying and mapping, the photographing parameters including single-photo photographing areas of the unmanned aerial vehicle for surveying and mapping at a set flight altitude, and each photographing point being corresponding to one of the single-photo photographing areas; and a relative position relationship determining module, configured to determine the preset relative position relationship between each two photographing points in the combined photographing point set according to a preset photo overlap degree index and the single-photo photographing areas. The surveying and mapping parameters further include the set flight altitude, and the set flight altitude is set to instruct the unmanned aerial vehicle for surveying and mapping to perform a flight photographing in the area to be surveyed and mapped at the set flight altitude.

Optionally, the relative position relationship determining module is configured to: determine a size of a single photo according to a frame size and a pixel width of the photographing apparatus; construct a two-dimensional coordinate system, and select a target point in the two-dimensional coordinate system as the central photographing point; generate a central photo in the two-dimensional coordinate system according to the central photographing point and the size of a single photo; generate four peripheral photos matching the preset photo overlap degree index with the central photo at an upper left corner, a lower left corner, an upper right corner, and a lower right corner of the central photo, respectively; determine a coordinate value of a peripheral photographing point corresponding to each of the four peripheral photos in the two-dimensional coordinate system according to a mapping relationship between the size of a single photo and the single-photo photographing areas; and determine the preset relative position relationship between each two photographing points in the combined photographing point set according to coordinate values of the central photographing point and each peripheral photographing point in the two-dimensional coordinate system.

Optionally, the device further includes a flight altitude calculating module configured to calculate the set flight altitude according to a pixel width of the photographing apparatus, lens focal length of the photographing apparatus, and a ground pixel resolution.

Optionally, the photographing parameter obtaining module is configured to calculate the single-photo photographing areas of the unmanned aerial vehicle for surveying and mapping at the set flight altitude according to a pixel width of the photographing apparatus, a frame size of the photographing apparatus, and a ground pixel resolution.

The surveying and mapping device for a control terminal described above may execute a surveying and mapping method for a control terminal according to any embodiment of the present disclosure, and has functional modules and advantageous effects corresponding to the execution of the method. For the technical details that are not described in detail in this embodiment, reference may be made to the surveying and mapping method for a control terminal according to any embodiment of the present disclosure.

Eighth Embodiment

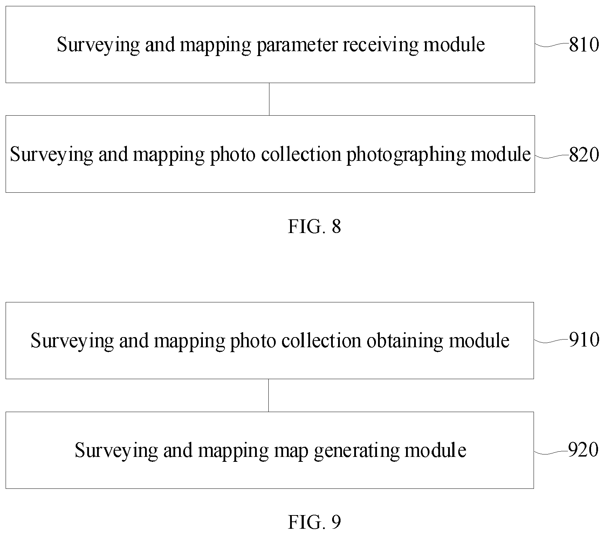

FIG. 8 is a schematic diagram illustrating a surveying and mapping device for an unmanned aerial vehicle for surveying and mapping according to an eighth embodiment of the present disclosure, as shown in FIG. 8, this device includes a surveying and mapping parameter receiving module 810 and a surveying and mapping photo collection photographing module 820.

The surveying and mapping parameter receiving module 810 is configured to receive surveying and mapping parameters sent by a control terminal, the surveying and mapping parameters are determined by the control terminal according to an area to be surveyed and mapped, and the surveying and mapping parameters include a plurality of sample points for surveying and mapping based on which an unmanned aerial vehicle for surveying and mapping performs surveying and mapping in the area to be surveyed and mapped.

The surveying and mapping photo collection photographing module 820 is configured to perform a flight photographing in the area to be surveyed and mapped according to the surveying and mapping parameters to obtain a surveying and mapping photo collection corresponding to the plurality of sample points for surveying and mapping.

In the embodiments of the present disclosure, by receiving a plurality of sample points for surveying and mapping based on which the surveying and mapping is performed in the area to be surveyed and mapped, and sent by the control terminal, a flight photographing is performed in the area to be surveyed and mapped according to the sample points for surveying and mapping, and then a surveying and mapping photo collection corresponding to the plurality of sample points for surveying and mapping is obtained. In this way, a new method for obtaining a surveying and mapping photo collection corresponding to the sample points for surveying and mapping is proposed, and the existing parallel-line-based mobile planning mode is replaced with an overall planning of multiple sample points for surveying and mapping, so that the problems of high cost and low surveying and mapping efficiency existing in the existing UAV-based aerial survey methods are solved, and the technical effects of reducing the surveying and mapping cost and improving the surveying and mapping efficiency are achieved.

Optionally, the surveying and mapping photo collection photographing module 820 is configured to obtain, when it is determined to fly to each of the plurality of sample points for surveying and mapping according to geographic position information of each of the plurality of sample points for surveying and mapping, surveying and mapping photos respectively corresponding to each of the plurality of sample points for surveying and mapping by photographing to form the surveying and mapping photo collection.

Optionally, the device further includes: a move instruction module, configured to receive at least one flight control instruction sent by the control terminal, and perform at least one of the following in air according to the flight control instruction: moving in a set direction and moving by a set distance; a hovering instruction module, configured to hover at a current position according to a hovering instruction sent by the control terminal; and a geographic position coordinate feedback module, configured to feed a geographic position coordinate of the current position back to the control terminal according to position query information sent by the control terminal, the geographic position coordinate being determined by the control terminal as a reference photographing location point.

Optionally, the surveying and mapping parameters further include a set flight altitude. The surveying and mapping photo collection photographing module 820 is configured to perform the flight photographing in the area to be surveyed and mapped at the set flight altitude according to the surveying and mapping parameters to obtain the surveying and mapping photo collection corresponding to the plurality of sample points for surveying and mapping.

Optionally, the device further includes: a surveying and mapping photo sending back module, configured to: send each surveying and mapping photo in the surveying and mapping photo collection back to a ground terminal respectively according to a photographing sequence; and/or store each surveying and mapping photo in the surveying and mapping photo collection in a built-in memory card according to the photographing sequence.

The surveying and mapping device for an unmanned aerial vehicle for surveying and mapping described above may execute a surveying and mapping method for unmanned aerial vehicle for surveying and mapping according to any embodiment of the present disclosure, and has functional modules and advantageous effects corresponding to the execution of the method. For the technical details that are not described in detail in this embodiment, reference may be made to the surveying and mapping method for unmanned aerial vehicle for surveying and mapping according to any embodiment of the present disclosure.

Ninth Embodiment

FIG. 9 is a schematic diagram illustrating a surveying and mapping device for a ground terminal according to a ninth embodiment of the present disclosure, as shown in FIG. 9, this device includes a surveying and mapping photo collection obtaining module 910 and a surveying and mapping map generating module 920.

The surveying and mapping photo collection obtaining module 910 is configured to obtain a surveying and mapping photo collection, the surveying and mapping photo collection being obtained by a flight photographing performed by an unmanned aerial vehicle for surveying and mapping in an area to be surveyed and mapped according to surveying and mapping parameters sent by a control terminal, and the surveying and mapping parameters including a plurality of sample points for surveying and mapping based on which the unmanned aerial vehicle for surveying and mapping performs surveying and mapping in the area to be surveyed and mapped.

The surveying and mapping map generating module 920 is configured to perform at least one of photo combination and photo stitching on a plurality of photos of the surveying and mapping photo collection to obtain a surveying and mapping map corresponding to the area to be surveyed and mapped.

In the embodiments of the present disclosure, by obtaining a surveying and mapping photo collection obtained by a flight photographing performed by an unmanned aerial vehicle for surveying and mapping in an area to be surveyed and mapped according to surveying and mapping parameters sent by a control terminal, and performing at least one of photo combination and photo stitching on a plurality of photos of the surveying and mapping photo collection, a surveying and mapping map corresponding to the area to be surveyed and mapped can be obtained. The surveying and mapping parameters include a plurality of sample points for surveying and mapping based on which the unmanned aerial vehicle for surveying and mapping performs surveying and mapping in the area to be surveyed and mapped. In this way, a new method for obtaining a surveying and mapping map corresponding to the area to be surveyed and mapped is proposed, and the existing parallel-line-based mobile planning mode is replaced with an overall planning of multiple sample points for surveying and mapping, so that the problems of high cost and low surveying and mapping efficiency existing in the existing UAV-based aerial survey methods are solved, and the technical effects of reducing the surveying and mapping cost and improving the surveying and mapping efficiency are achieved.

Optionally, the surveying and mapping map generating module 920 is configured to: obtain, in the surveying and mapping photo collection, a central surveying and mapping photo taken at at least one central photographing point and peripheral surveying and mapping photos taken at a plurality of peripheral photographing points associated with each of the at least one central photographing point; stitch each central surveying and mapping photo and corresponding peripheral surveying and mapping photos into a combined photographing photo according to a degree of photo overlap between each of the peripheral surveying and mapping photos and corresponding central surveying and mapping photo; and obtain the surveying and mapping map corresponding to the area to be surveyed and mapped according to the combined photographing photo corresponding to each of the at least one central photographing point.

Optionally, the surveying and mapping map of the area to be surveyed and mapped includes at least one of the following: a digital surface model of the area to be surveyed and mapped, a three-dimensional map of the area to be surveyed and mapped, and a plane map of the area to be surveyed and mapped.

The surveying and mapping device for a ground terminal described above may execute a surveying and mapping method for a ground terminal according to any embodiment of the present disclosure, and has functional modules and advantageous effects corresponding to the execution of the method. For the technical details that are not described in detail in this embodiment, reference may be made to the surveying and mapping method for a ground terminal according to any embodiment of the present disclosure.

Tenth Embodiment

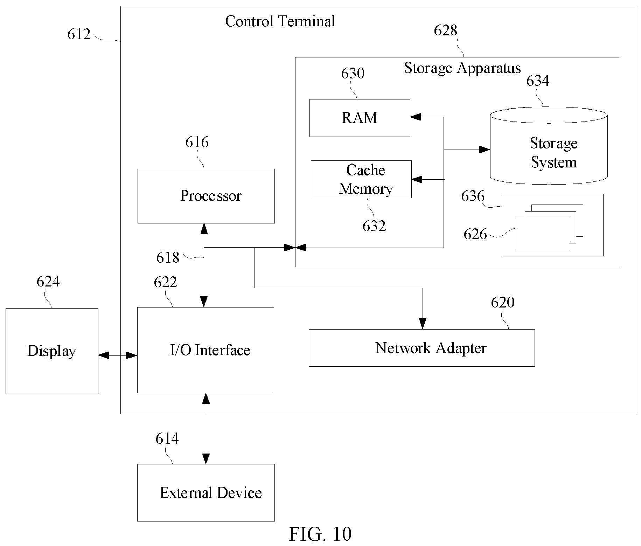

FIG. 10 is a schematic structural diagram illustrating a control terminal according to a tenth embodiment of the present disclosure. FIG. 10 shows a block diagram of a control terminal 612 suitable for implementing embodiments of the present disclosure. The control terminal 612 shown in FIG. 10 is merely an example and is not intended to limit, in any way, the functions and applicable scope of the embodiments of the present disclosure.

As shown in FIG. 10, the control terminal 612 is embodied in the form of a general-purpose computing device. The components of the control terminal 612 may include, but are not limited to, one or more processors 616, a storage apparatus 628, and a bus 618 that couples different system components (including the storage apparatus 628 and the one or more processors 616).

The bus 618 represents one or more of several types of bus structures, including a memory bus, a memory controller, a peripheral bus, an accelerated graphics port, and local bus in a processor or a bus structure using any of a variety of bus architectures. By way of example, such architectures include, but are not limited to, Industry Standard Architecture (ISA) bus, Micro Channel Architecture (MCA) bus, Enhanced ISA bus, Video Electronics Standards Association (VESA) local bus, and Peripheral Component Interconnect (PCI) bus.

The control terminal 612 typically includes a variety of computer system readable media. Such media may be any available media that are accessible by the control terminal 612, including both volatile and non-volatile media, removable and non-removable media.

The storage apparatus 628 may include computer system readable media in the form of volatile memory, such as a random access memory (RAM) 630 and/or a cache memory 632. The control terminal 612 may further include other removable/non-removable, volatile/non-volatile computer system storage media. By way of example, a storage system 634 can be provided for reading from and writing to a non-removable, non-volatile magnetic medium (not shown in FIG. 10 and typically called as a "hard drive"). Although the medium is not shown in FIG. 10, a magnetic disk drive for reading from and writing to a removable, non-volatile magnetic disk (e.g., a "floppy disk"), and an optical disk drive for reading from or writing to a removable, non-volatile optical disk such as a Compact Disc-Read Only Memory (CD-ROM), a Digital Video Disc-Read Only Memory (DVD-ROM) or other optical media may be provided. In such cases, each drive may be connected with the bus 618 via one or more data media interfaces. The storage apparatus 628 may include at least one program product having a set (e.g., at least one) of program modules that are configured to carry out the functions of each embodiment of the present disclosure.

A program 636, having a set (at least one) of program modules 626, may be stored in the storage apparatus 628 by way of example, wherein such program modules 626 include, but are not limited to, an operating system, one or more application programs, other program modules, and program data. Each or some combination of these examples may include an implementation of a networking environment. The program modules 626 generally carry out the functions and/or methods of the embodiments described in the present disclosure.

The control terminal 612 may also communicate with one or more external devices 614 (such as a keyboard, a pointing device, a camera, a display 624, etc.), and may also communicate with one or more devices that enable a user to interact with the control terminal 612, and/or any devices (e.g., a network card, a modem, etc.) that enable the control terminal 612 to communicate with one or more other computing devices. Such communication may occur via an input/output (I/O) interface 622. Still yet, the control terminal 612 may communicate with one or more networks (such as a Local Area Network (LAN), a Wide Area Network (WAN), and/or a public network (e.g., the Internet)) via a network adapter 620. As shown in the figure, the network adapter 620 communicates with the other modules of the control terminal 612 via the bus 618. It should be understood that although not shown in the figure, other hardware and/or software modules could be used in conjunction with the control terminal 612, which include, but are not limited to: microcode, device drivers, redundant processing units, external disk drive arrays, Redundant Arrays of Independent Disks (RAID) systems, tape drives, data archival storage systems, etc.

The processor 616 executes the respective functional applications and data processing, for example implementation of the surveying and mapping method for a control terminal according to the foregoing embodiments of the present disclosure, by running a program stored in the storage apparatus 628.

In other words, when executing the program, the processing unit implements operations of: determining surveying and mapping parameters matching an area to be surveyed and mapped, the surveying and mapping parameters including a plurality of sample points for surveying and mapping based on which the unmanned aerial vehicle for surveying and mapping performs surveying and mapping in the area to be surveyed and mapped; and sending the surveying and mapping parameters to the unmanned aerial vehicle for surveying and mapping.

Eleventh Embodiment

In the eleventh embodiment, the embodiments of the present disclosure provides an unmanned aerial vehicle for surveying and mapping for executing a surveying and mapping method for an unmanned aerial vehicle for surveying and mapping provided by any embodiment of the present disclosure, the unmanned aerial vehicle for surveying and mapping includes: one or more processors; a storage apparatus configured to store one or more programs; the one or more programs, when executed by the one or more processors, causing the one or more processors to implement the surveying and mapping method for an unmanned aerial vehicle for surveying and mapping according to any of the embodiments of the present disclosure. The surveying and mapping method for an unmanned aerial vehicle for surveying and mapping includes: receiving surveying and mapping parameters sent by a control terminal, the surveying and mapping parameters being determined by the control terminal according to an area to be surveyed and mapped, and the surveying and mapping parameters including a plurality of sample points for surveying and mapping based on which an unmanned aerial vehicle for surveying and mapping performs surveying and mapping in the area to be surveyed and mapped; and performing a flight photographing in the area to be surveyed and mapped according to the surveying and mapping parameters to obtain a surveying and mapping photo collection corresponding to the plurality of sample points for surveying and mapping. The structure and details of the eleventh embodiment may be found in FIG. 10 and the tenth embodiment.

Twelfth Embodiment

In the twelfth embodiment, the embodiments of the present disclosure provides a ground terminal for executing a surveying and mapping method for a ground terminal provided by any embodiment of the present disclosure, the ground terminal includes: one or more processors; a storage apparatus configured to store one or more programs; the one or more programs, when executed by the one or more processors, causing the one or more processors to implement the surveying and mapping method for a ground terminal according to any of the embodiments of the present disclosure. The surveying and mapping method for a ground terminal includes: obtaining a surveying and mapping photo collection, the surveying and mapping photo collection being obtained by a flight photographing performed by an unmanned aerial vehicle for surveying and mapping in an area to be surveyed and mapped according to surveying and mapping parameters sent by a control terminal, and the surveying and mapping parameters including a plurality of sample points for surveying and mapping based on which the unmanned aerial vehicle for surveying and mapping performs surveying and mapping in the area to be surveyed and mapped; and performing at least one of photo combination and photo stitching on a plurality of photos of the surveying and mapping photo collection to obtain a surveying and mapping map corresponding to the area to be surveyed and mapped. The structure and details of the twelfth embodiment may be found in FIG. 10 and the tenth embodiment.

Thirteenth Embodiment

The thirteenth embodiment of the present disclosure further provides a computer storage medium storing a computer program. In one case, computer program, when executed by a computer processor, executes a surveying and mapping method for a control terminal as described in any one of the foregoing embodiments of the present disclosure, the method including: determining surveying and mapping parameters matching an area to be surveyed and mapped, the surveying and mapping parameters including a plurality of sample points for surveying and mapping based on which an unmanned aerial vehicle for surveying and mapping performs surveying and mapping in the area to be surveyed and mapped; and sending the surveying and mapping parameters to the unmanned aerial vehicle for surveying and mapping. In another case, the computer program, when executed by a computer processor, executes a surveying and mapping method for an unmanned aerial vehicle for surveying and mapping as described in any one of the foregoing embodiments of the present disclosure, the method including: receiving surveying and mapping parameters sent by a control terminal, the surveying and mapping parameters being determined by the control terminal according to an area to be surveyed and mapped, and the surveying and mapping parameters including a plurality of sample points for surveying and mapping based on which an unmanned aerial vehicle for surveying and mapping performs surveying and mapping in the area to be surveyed and mapped; and performing a flight photographing in the area to be surveyed and mapped according to the surveying and mapping parameters to obtain a surveying and mapping photo collection corresponding to the plurality of sample points for surveying and mapping. In another case, the computer program, when executed by a computer processor, executes a surveying and mapping method for a ground terminal as described in any one of the foregoing embodiments of the present disclosure, the method including: obtaining a surveying and mapping photo collection, the surveying and mapping photo collection being obtained by a flight photographing performed by an unmanned aerial vehicle for surveying and mapping in an area to be surveyed and mapped according to surveying and mapping parameters sent by a control terminal, and the surveying and mapping parameters including a plurality of sample points for surveying and mapping based on which the unmanned aerial vehicle for surveying and mapping performs surveying and mapping in the area to be surveyed and mapped; and performing at least one of photo combination and photo stitching on a plurality of photos of the surveying and mapping photo collection to obtain a surveying and mapping map corresponding to the area to be surveyed and mapped.

Any combination of one or more computer readable media may be used as the computer storage medium of the embodiment of the present disclosure. The computer readable medium may be a computer readable signal medium or a computer readable storage medium. The computer readable storage medium may be, for example but not limited to, an electronic, magnetic, optical, electromagnetic, infrared, or semiconductor system, apparatus, or device, or any combination of the foregoing. More specific examples (a non-exhaustive list) of the computer readable storage medium include: an electrical connection having one or more wires, a portable computer diskette, a hard disk, a RAM, a Read-Only Memory (ROM), an Erasable Programmable Read-Only Memory (EPROM or Flash memory), an optical fiber, a portable Compact Disc Read-Only Memory (CD-ROM), an optical storage device, a magnetic storage device, or any suitable combination of the foregoing. In the context of this document, the computer readable storage medium may be any tangible medium that can contain, or store a program, and the program can be used by or used in connection with an instruction execution system, apparatus or device.

The computer readable signal medium may include a data signal carrying computer readable program codes therein, with the signal propagated in baseband or as part of a carrier wave. Such a propagated data signal may take any of a variety of forms, including, but not limited to, an electro-magnetic signal, an optical signal, or any suitable combination thereof. The computer readable signal medium may be any computer readable medium other than a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, Radio Frequency (RF), or the like, or any suitable combination of the foregoing.

Computer program code for carrying out operations of the present disclosure may be written in one or more programming languages or any combination thereof, including an object-oriented programming language such as Java, Smalltalk, C++ or the like, and conventional procedural programming languages such as the "C" programming language or similar programming languages. The program code may be executed entirely on the user's computer, executed partly on the user's computer, executed as a stand-alone software package, executed partly on the user's computer and partly on a remote computer or executed entirely on the remote computer or remote server. In a scenario involving a remote computer, the remote computer may be connected with the user's computer via any type of network, including LAN or WAN, or may be connected with an external computer (for example, via the Internet using an Internet Service Provider).

INDUSTRIAL APPLICABILITY

In the embodiments of the present disclosure, a new surveying and mapping system and surveying and mapping method are proposed, and the existing parallel-line-based mobile planning mode is replaced with an overall planning of the plurality of sample points for surveying and mapping based on the new surveying and mapping system, so that the problems of high cost and low surveying and mapping efficiency existing in the existing UAV-based aerial survey methods are solved, and the technical effects of reducing the surveying and mapping cost and improving the surveying and mapping efficiency are achieved.

**Claims**

1. A surveying and mapping system, comprising a control terminal (10), an unmanned aerial vehicle for surveying and mapping (20), and a ground terminal (30),

   **characterized in that**, the control terminal (10) is configured to determine surveying and mapping parameters matching an area to be surveyed and mapped and send the surveying and mapping parameters to the unmanned aerial vehicle for surveying and mapping, and the surveying and mapping parameters comprise a plurality of sample points for surveying and mapping based on which the unmanned aerial vehicle for surveying and mapping performs surveying and mapping in the area to be surveyed and mapped;
   the unmanned aerial vehicle for surveying and mapping is configured to receive the surveying and mapping parameters and perform a flight photographing in the area to be surveyed and mapped according to the surveying and mapping parameters to obtain a surveying and mapping photo collection corresponding to the plurality of sample points for surveying and mapping; and
   the ground terminal is configured to obtain the surveying and mapping photo collection and perform at least one of photo combination and photo stitching on a plurality of photos of the surveying and mapping photo collection to obtain a surveying and mapping map corresponding to the area to be surveyed and mapped,
   wherein the control terminal (10) is configured to:

   obtain a reference photographing location point corresponding to the area to be surveyed and mapped, and establish a mapping relationship between a photographing point in a combined photographing point set and the reference photographing location point; determine a plurality of auxiliary photographing location points corresponding to the reference photographing location point according to the mapping relationship and according to a preset relative position relationship between each two photographing points in the combined photographing point set; and use the reference photographing location point and the plurality of auxiliary photographing location points as the plurality of sample points for surveying and mapping based on which the unmanned aerial vehicle for surveying and mapping performs surveying and mapping in the area to be surveyed and mapped, or
   the control terminal (10) is configured to:
   determine one or a plurality of combined photographing areas for surveying and mapping within the area to be surveyed and mapped according to information of the area to be surveyed and mapped and according to a combined photographing area corresponding to a combined photographing point set; determine a plurality of photographing location points in the combined photographing area for surveying and mapping according to a preset relative position relationship between each two photographing points in the combined photographing point set; and use the plurality of photographing location points as the plurality of sample points for surveying and mapping based on which the unmanned aerial vehicle for surveying and mapping performs surveying and mapping in the area to be surveyed and mapped.

2. The surveying and mapping system according to claim 1, further comprising an unmanned aerial vehicle for operation;

   wherein the control terminal (10) is further configured to use the area to be surveyed and mapped as an operation area, obtain map tile data corresponding to the operation area from the ground terminal, generate an area map of the operation area according to the map tile data and display the area map, determine at least one operation plot in the operation area according to at least one area locating point selected by a user from the area map, generate an operation route corresponding to the at least one operation plot, and send the operation route to the unmanned aerial vehicle for operation; and

the unmanned aerial vehicle for operation is configured to receive the operation route and perform a flight operation in the at least one operation plot according to the operation route.

3.  A surveying and mapping method for a control terminal, **characterized by**, applied to the surveying and mapping system according to any one of claims 1-2, wherein the method comprises:

    determining (210, 310, 410) surveying and mapping parameters matching an area to be surveyed and mapped, wherein the surveying and mapping parameters comprise a plurality of sample points for surveying and mapping based on which an unmanned aerial vehicle for surveying and mapping performs surveying and mapping in the area to be surveyed and mapped; and

    sending (220, 320, 420) the surveying and mapping parameters to the unmanned aerial vehicle for surveying and mapping.

4.  The method according to claim 3, wherein the determining (210, 310, 410) surveying and mapping parameters matching an area to be surveyed and mapped comprises:

    obtaining (311) a reference photographing location point corresponding to the area to be surveyed and mapped, and establishing a mapping relationship between a photographing point in a combined photographing point set and the reference photographing location point;

    determining (312) a plurality of auxiliary photographing location points corresponding to the reference photographing location point according to the mapping relationship and a preset relative position relationship between each two photographing points in the combined photographing point set; and

    using (313) the reference photographing location point and the plurality of auxiliary photographing location points as the plurality of sample points for surveying and mapping based on which the unmanned aerial vehicle for surveying and mapping performs surveying and mapping in the area to be surveyed and mapped.

5.  The method according to claim 3, wherein the determining (210, 310, 410) surveying and mapping parameters matching an area to be surveyed and mapped comprises:

    determining (411) one or a plurality of combined photographing areas for surveying and mapping within the area to be surveyed and mapped according to information of the area to be surveyed and mapped and a combined photographing area corresponding to a combined photographing point set;

determining (412) a plurality of photographing location points in the combined photographing area for surveying and mapping according to a preset relative position relationship between each two photographing points in the combined photographing point set; and

using (413) the plurality of photographing location points as the plurality of sample points for surveying and mapping based on which the unmanned aerial vehicle for surveying and mapping performs surveying and mapping in the area to be surveyed and mapped.

6.  The method according to claim 5, wherein there is an overlapping area between each two of a plurality of photos taken according to a plurality of photographing points in the combined photographing point set; and

    there is an overlapping area between each two of the plurality of combined photographing areas for surveying and mapping determined in the area to be surveyed and mapped,

    wherein the combined photographing areas for surveying and mapping are photographing areas formed by combining and/or stitching the plurality of photos after obtaining the plurality of photos taken according to the plurality of photographing points in the combined photographing point set; and

    a surveying and mapping map of the area to be surveyed and mapped is formed by combining and/or stitching each of the plurality of combined photographing areas for surveying and mapping.

7.  A surveying and mapping method for an unmanned aerial vehicle for surveying and mapping, **characterized by**, applied to the surveying and mapping system according to any one of claims 1-2, comprising:

    receiving (510) surveying and mapping parameters sent by a control terminal, the surveying and mapping parameters being determined by the control terminal according to an area to be surveyed and mapped, and the surveying and mapping parameters comprising a plurality of sample points for surveying and mapping based on which an unmanned aerial vehicle for surveying and mapping performs surveying and mapping in the area to be surveyed and mapped; and

performing (520) a flight photographing in the area to be surveyed and mapped according to the surveying and mapping parameters to obtain a surveying and mapping photo collection corresponding to the plurality of sample points for surveying and mapping.

8. The method according to claim 7, wherein the performing (520) a flight photographing in the area to be surveyed and mapped according to the surveying and mapping parameters to obtain a surveying and mapping photo collection corresponding to the plurality of sample points for surveying and mapping comprises:

obtaining, when it is determined to fly to each of the plurality of sample points for surveying and mapping according to geographic position information of each of the plurality of sample points for surveying and mapping, surveying and mapping photos respectively corresponding to each of the plurality of sample points for surveying and mapping by photographing to form the surveying and mapping photo collection.

9. The method according to claim 7 or 8, before the receiving (510) surveying and mapping parameters sent by a control terminal, further comprising:

receiving at least one flight control instruction sent by the control terminal, and performing at least one of the following in air according to the flight control instruction: moving in a set direction and moving by a set distance;
hovering at a current position according to a hovering instruction sent by the control terminal; and
feeding a geographic position coordinate of the current position back to the control terminal according to position query information sent by the control terminal, the geographic position coordinate being determined by the control terminal as a reference photographing location point.

10. The method according to any one of claims 7-9, wherein the surveying and mapping parameters further comprise a set flight altitude, and the performing (520) a flight photographing in the area to be surveyed and mapped according to the surveying and mapping parameters to obtain a surveying and mapping photo collection corresponding to the plurality of sample points for surveying and mapping comprises:
performing the flight photographing in the area to be surveyed and mapped at the set flight altitude according to the surveying and mapping parameters to obtain the surveying and mapping photo collection corresponding to the plurality of sample points for surveying and mapping.

11. The method according to any one of claims 7-10, after the performing (520) a flight photographing in the area to be surveyed and mapped according to the surveying and mapping parameters to obtain a surveying and mapping photo collection corresponding to the plurality of sample points for surveying and mapping, further comprising at least one of the following:

sending each surveying and mapping photo in the surveying and mapping photo collection back to a ground terminal respectively according to a photographing sequence; and
storing each surveying and mapping photo in the surveying and mapping photo collection in a built-in memory card according to the photographing sequence.

12. A surveying and mapping method for a ground terminal, **characterized by**, applied to the surveying and mapping system according to any one of claims 1-2, comprising:

obtaining (610) a surveying and mapping photo collection, the surveying and mapping photo collection being obtained by a flight photographing performed by an unmanned aerial vehicle for surveying and mapping in an area to be surveyed and mapped according to surveying and mapping parameters sent by a control terminal, and the surveying and mapping parameters comprising a plurality of sample points for surveying and mapping based on which the unmanned aerial vehicle for surveying and mapping performs surveying and mapping in the area to be surveyed and mapped; and
performing (620) at least one of photo combination and photo stitching on a plurality of photos of the surveying and mapping photo collection to obtain a surveying and mapping map corresponding to the area to be surveyed and mapped.

13. The method according to claim 12, wherein the performing (620) at least one of photo combination and photo stitching on a plurality of photos of the surveying and mapping photo collection to obtain a surveying and mapping map corresponding to the area to be surveyed and mapped comprises:

obtaining, in the surveying and mapping photo collection, a central surveying and mapping photo taken at at least one central photographing point and peripheral surveying and mapping photos taken at a plurality of peripheral photographing points associated with each of the at least one central photographing point;
stitching each central surveying and mapping photo and corresponding peripheral surveying and mapping photos into a combined photographing photo according to a degree of photo overlap between each of the peripheral surveying and mapping photos and corresponding central surveying and mapping photo; and obtaining the surveying and mapping map corresponding to the area to be surveyed and mapped according to the combined photographing photo corresponding to each of the at least one central photographing point.

14. The method according to claim 12 or 13, wherein the surveying and mapping map of the area to be surveyed and mapped comprises at least one of the following:
a digital surface model of the area to be surveyed and mapped, a three-dimensional map of the area to be surveyed and mapped, and a plane map of the area to be surveyed and mapped.

15. A surveying and mapping device for a control terminal, **characterized by**, applied to the surveying and mapping system according to any one of claims 1-2, comprising:

a surveying and mapping parameter determining module (710), configured to determine surveying and mapping parameters matching an area to be surveyed and mapped, the surveying and mapping parameters comprising a plurality of sample points for surveying and mapping based on which an unmanned aerial vehicle for surveying and mapping performs surveying and mapping in the area to be surveyed and mapped; and
a surveying and mapping parameter sending module (720), configured to send the surveying and mapping parameters to the unmanned aerial vehicle for surveying and mapping.

**Patentansprüche**

1. Vermessungs- und Kartierungssystem, das ein Steuerterminal (10), ein unbemanntes Luftfahrzeug zur Vermessung und Kartierung (20) und ein Bodenterminal (30) umfasst,

**dadurch gekennzeichnet, dass** das Steuerterminal (10) konfiguriert ist, um Vermessungs- und Kartierungsparameter zu bestimmen, die zu einem zu vermessenden und zu kartierenden Gebiet passen, und die Vermessungs- und Kartierungsparameter an das unbemannte Luftfahrzeug zur Vermessung und Kartierung zu senden, und die Vermessungs- und Kartierungsparameter eine Vielzahl von Probepunkten zur Vermessung und Kartierung umfassen, auf deren Grundlage das unbemannte Luftfahrzeug zur Vermessung und Kartierung eine Vermessung und Kartierung in dem zu vermessenden und zu kartierenden Gebiet durchführt;
das unbemannte Luftfahrzeug zur Vermessung und Kartierung so konfiguriert ist, dass es die Vermessungs- und Kartierungsparameter empfängt und eine Flugfotografie in dem zu vermessenden und zu kartierenden Gebiet gemäß den Vermessungs- und Kartierungsparametern durchführt, um eine Vermessungs- und Kartierungsfotosammlung zu erhalten, die der Vielzahl von Probepunkten zur Vermessung und Kartierung entspricht; und
das Bodenterminal so konfiguriert ist, dass es die Vermessungs- und Kartierungsfotosammlung erhält und mindestens eine Fotokombination oder ein Fotostitching an einer Vielzahl von Fotos der Vermessungs- und Kartierungsfotosammlung durchführt, um eine Vermessungs- und Kartierungskarte zu erhalten, die dem zu vermessenden und zu kartierenden Gebiet entspricht,
wobei das Steuerterminal (10) konfiguriert ist einen Referenzfotografierortspunkt zu erhalten, der dem zu vermessenden und kartierenden Gebiet entspricht, und eine Abbildungsbeziehung zwischen einem Fotografierpunkt in einem kombinierten Fotografierpunktsatz und dem Referenzfotografierortspunkt herzustellen; eine Vielzahl von Hilfsfotografierortspunkten zu bestimmen, die dem Referenzfotografierortspunkt gemäß der Abbildungsbeziehung und gemäß einer voreingestellten relativen Positionsbeziehung zwischen jeweils zwei Fotografierpunkten in dem kombinierten Fotografierpunktsatz entsprechen; und die Referenzfotografierortspunkte und die Vielzahl von Hilfsfotografierortspunkten als die Vielzahl von Probepunkten für die Vermessung und Kartierung zu verwenden, auf deren Grundlage das unbemannte Luftfahrzeug für die Vermessung und Kartierung eine Vermessung und Kartierung in dem zu vermessenden und zu kartierenden Gebiet durchführt, oder das Steuerterminal (10) so konfiguriert ist, dass es durchführt:
Bestimmen eines oder mehrerer kombinierter Fotografiergebiete zur Vermessung und Kartierung innerhalb des zu vermessenden und zu kartierenden Gebiets gemäß Informationen des zu vermessenden und zu kartierenden Gebiets und gemäß einem kombinierten Fotografierbereich, der einem kombinierten Fotografierpunktsatz entspricht; bestimmen einer Vielzahl von Fotografierortspunkten in dem kombinierten Fotografiergebiet zur Vermessung und Kartierung gemäß einer voreingestellten relativen Positionsbeziehung zwischen jeweils zwei Fotografierpunkten in dem kombinierten Fotografierpunktsatz; und Verwenden der Vielzahl von Fotografierortspunkten als die Vielzahl von Probenpunkten zur Vermessung und Kartierung, auf deren Grundlage das unbemannte Luftfahrzeug zur Vermessung und Kartierung eine Vermessung und Kartierung in dem zu vermessenden und kartierenden Gebiet durchführt.

2. Vermessungs- und Kartierungssystem nach Anspruch 1 ferner umfassend ein unbemanntes Luftfahrzeug für den Betrieb;

    wobei das Steuerterminal (10) ferner konfiguriert ist, um das zu vermessende und kartierenden Gebiet als einen Betriebsbereich zu verwenden, Kartenkacheldaten, die dem Betriebsbereich entsprechen, von dem Bodenterminal zu erhalten, eine Bereichskarte des Betriebsbereichs gemäß den Kartenkacheldaten zu erzeugen und die Bereichskarte anzuzeigen, mindestens eine Betriebsfläche in dem Betriebsbereich gemäß mindestens einem Bereichsortungspunkt, der von einem Benutzer aus der Bereichskarte ausgewählt wird, zu bestimmen, eine Betriebsroute, die der mindestens einen Betriebsfläche entspricht, zu erzeugen und die Betriebsroute zum Betrieb an das unbemannte Luftfahrzeug zu senden; und

    das unbemannte Luftfahrzeug für den Betrieb so konfiguriert ist, dass es die Betriebsroute empfängt und einen Flugbetrieb auf der mindestens einen Betriebsfläche entsprechend der Betriebsroute durchführt.

3. Vermessungs- und Kartierungsverfahren für ein Steuerterminal, **dadurch gekennzeichnet, dass** es auf das Vermessungs- und Kartierungssystem nach einem der Ansprüche 1 bis 3 angewendet wird, wobei das Verfahren umfasst:

    Bestimmen (210, 310, 410) von Vermessungs- und Kartierungsparametern, die zu einem zu vermessenden und zu kartierenden Gebiet passen, wobei die Vermessungs- und Kartierungsparameter eine Vielzahl von Probepunkten zur Vermessung und Kartierung umfassen, auf deren Grundlage ein unbemanntes Luftfahrzeug zur Vermessung und Kartierung in dem zu vermessenden und zu kartierenden Gebiet eine Vermessung und Kartierung durchführt; und Senden (220, 320, 420) der Vermessungs- und Kartierungsparameter an das unbemannte Luftfahrzeug zur Vermessung und Kartierung

4. Verfahren nach Anspruch 3, wobei das Bestimmen (210, 310, 410) von Vermessungs- und Kartierungsparametern, die zu einem zu vermessenden und zu kartierenden Gebiet passen, umfasst:

    Erhalten (311) eines Referenzfotografierortspunktes, der dem zu vermessenden und zu kartierenden Gebiet entspricht, und Herstellen einer Kartierungsbeziehung zwischen einem Fotografierpunkt in einem kombinierten Fotografierpunktsatz und dem Referenzfotografierortspunkt;

    Bestimmen (312) einer Vielzahl von Hilfsfotografierortspunkten, die dem Referenzfotografierortspunkt entsprechen, gemäß der Abbildungsbeziehung und einer voreingestellten relativen Positionsbeziehung zwischen jeweils zwei Fotographierpunkten in dem kombinierten Fotografierpunktsatz ; und

    Verwenden (313) des Referenzfotografierortspunkt und der mehreren Hilfsfotografierortspunkten als die mehreren Probenpunkte für die Vermessung und Kartierung, auf deren Grundlage das unbemannte Luftfahrzeug für die Vermessung und Kartierung eine Vermessung und Kartierung in dem zu vermessenden und zu kartierenden Gebiet durchführt.

5. Verfahren nach Anspruch 3, wobei das Bestimmen (210, 310, 410) von Vermessungs- und Kartierungsparametern, die zu einem zu vermessenden und zu kartierenden Gebiet passen, umfasst:

    Bestimmen (411) eines oder mehrerer kombinierter Aufnahmebereiche zur Vermessung und Kartierung innerhalb des zu vermessenden und zu kartierenden Gebietes entsprechend den Informationen des zu vermessenden und zu kartierenden Gebietes und eines kombinierten Aufnahmebereiches, der einem kombinierten Fotografierpunktsatz entspricht;

    Bestimmen (412) einer Vielzahl von Fotographierortspunkten in dem kombinierten Fotografiergebiet zur Vermessung und Kartierung gemäß einer voreingestellten relativen Positionsbeziehung zwischen jeweils zwei Fotographierortspunkten in dem kombinierten Fotographierpunktsatz; und

    Verwenden (413) der Vielzahl von Fotographierortspunkten als die Vielzahl von Probepunkten für die Vermessung und Kartierung, auf deren Grundlage das unbemannte Luftfahrzeug für die Vermessung und Kartierung die Vermessung und Kartierung in dem zu vermessenden und zu kartierenden Gebiet durchführt.

6. Verfahren nach Anspruch 5, wobei es einen Überlappungsbereich zwischen jeweils zwei aus einer Vielzahl von Fotos gibt, die gemäß einer Vielzahl von Fotografierpunkten in dem kombinierten Fotografierpunktsatz aufgenommen wurden; und

es einen Überlappungsbereich zwischen jeweils zwei der mehreren kombinierten Fotografiergebiete für die Vermessung und Kartierung gibt, die in dem zu vermessenden und zu kartierenden Gebiet festgelegt wurden,
wobei die kombinierten Fotografiergebiete zur Vermessung und Kartierung Fotografiergebiete sind, die durch Kombinieren und/oder Zusammenfügen der Vielzahl von Fotos gebildet werden, nachdem die Vielzahl von Fotos erhalten wurde, die gemäß der Vielzahl von Fotopunkten in dem kombinierten Fotografierpunktsatz aufgenommen wurden; und
eine Vermessungs- und Kartierungskarte des zu vermessenden und zu kartierenden Gebiets durch Kombinieren und/oder Zusammenfügen jedes der mehreren kombinierten Fotografiergebiete für die Vermessung und Kartierung gebildet wird.

7.  Vermessungs- und Kartierungsverfahren für ein unbemanntes Luftfahrzeug zur Vermessung und Kartierung, **dadurch gekennzeichnet, dass** es auf das Vermessungs- und Kartierungssystem nach einem der Ansprüche 1 bis 3 angewendet wird und Folgendes umfasst:

    Empfangen (510) von Vermessungs- und Kartierungsparametern, die von einem Steuerterminal gesendet werden, wobei die Vermessungs- und Kartierungsparameter von dem Steuerterminal gemäß einem zu vermessenden und zu kartierenden Gebiet bestimmt werden und die Vermessungs- und Kartierungsparameter eine Vielzahl von Probepunkten zur Vermessung und Kartierung umfassen, auf deren Grundlage ein unbemanntes Luftfahrzeug zur Vermessung und Kartierung eine Vermessung und Kartierung in dem zu vermessenden und zu kartierenden Gebiet durchführt; und
    Durchführen (520) einer Flugfotografie in dem zu vermessenden und zu kartierenden Gebiet gemäß den Vermessungs- und Kartierungsparametern, um eine Vermessungs- und Kartierungsfotosammlung zu erhalten, die der Vielzahl von Probenpunkten für die Vermessung und Kartierung entspricht.

8.  Verfahren nach Anspruch 7, wobei das Durchführen (520) einer Flugfotografie in dem zu vermessenden und zu kartierenden Gebiet gemäß den Vermessungs- und Kartierungsparametern, um eine Vermessungs- und Kartierungsfotosammlung zu erhalten, die der Vielzahl von Probenpunkten zur Vermessung und Kartierung entspricht, umfasst:
    Erhalten von Vermessungs- und Kartierungsfotos, wenn bestimmt wird, zu jedem der Vielzahl von Probenpunkten für die Vermessung und Kartierung gemäß geographischer Positionsinformation jedes der Vielzahl von Probenpunkten für die Vermessung und Kartierung zu fliegen, die jeweils jedem der Vielzahl von Probenpunkten für die Vermessung und Kartierung entsprechen, durch Fotografieren, um die Vermessungs- und Kartierungsfotosammlung zu bilden.

9.  Verfahren nach Anspruch 7 oder 8, das vor dem Empfang (510) von Vermessungs- und Kartierungsparametern, die von einem Steuerterminal gesendet werden, ferner umfasst:

    Empfangen von mindestens einer vom Steuerterminal gesendeten Flugsteuerungsanweisung und Ausführen von mindestens einem der folgenden Vorgänge in der Luft gemäß der Flugsteuerungsanweisung: Bewegen in eine bestimmte Richtung und Bewegen um eine bestimmte Strecke;
    Schweben an einer aktuellen Position gemäß einer vom Steuerterminal gesendeten Schwebeanweisung; und
    Zuführen einer geographischen Positionskoordinate der aktuellen Position zurück an das Steuerterminal entsprechend der vom Steuerterminal gesendeten Positionsabfrageinformation, wobei die geographische Positionskoordinate vom Steuerterminal als Referenzfotografierortspunkt bestimmt wird.

10. Verfahren nach einem der Ansprüche 7 bis 9, wobei die Vermessungs- und Kartierungsparameter ferner eine eingestellte Flughöhe umfassen, und das Durchführen (520) eines Flugfotografierens in dem zu vermessenden und zu kartierenden Gebiet gemäß den Vermessungs- und Kartierungsparametern, um eine Vermessungs- und Kartierungsfotosammlung zu erhalten, die der Vielzahl von Probenpunkten für die Vermessung und Kartierung entspricht, umfasst:
    Durchführen der Flugfotografie in dem zu vermessenden und zu kartierenden Gebiet in der eingestellten Flughöhe gemäß den Vermessungs- und Kartierungsparametern, um die Vermessungs- und Kartierungsfotosammlung zu erhalten, die der Vielzahl von Probepunkten für die Vermessung und Kartierung entspricht.

11. Verfahren nach einem der Ansprüche 7-10, wobei nach der Durchführung (520) einer Flugfotografie in dem zu vermessenden und zu kartierenden Gebiet gemäß den Vermessungs- und Kartierungsparametern eine Vermessungs- und Kartierungsfotosammlung erhalten wird, die der Vielzahl von Probepunkten für die Vermessung und Kartierung entspricht, und das Verfahren ferner mindestens eine der folgenden Maßnahmen umfasst:

Senden jedes Vermessungs- und Kartierungsfotos in der Vermessungs- und Kartierungsfotosammlung zurück zu einem Bodenterminal gemäß einer Fotografiersequenz; und
Speichern jedes Vermessungs- und Kartierungsfotos in der Vermessungs- und Kartierungsfotosammlung auf einer eingebauten Speicherkarte entsprechend der Fotosequenz.

12. Vermessungs- und Kartierungsverfahren für ein Bodenterminal, **dadurch gekennzeichnet, dass** es, angewandt auf das Vermessungs- und Kartierungssystem nach einem der Ansprüche 1 bis 3, umfasst:

Erhalten (610) einer Vermessungs- und Kartierungsfotosammlung, wobei die Vermessungsund Kartierungsfotosammlung durch Flugphotographie erhalten wird, das von einem unbemannten Luftfahrzeug zur Vermessung und Kartierung in einem zu vermessenden und zu kartierenden Gebiet gemäß Vermessungs- und Kartierungsparametern durchgeführt wird, die von einem Steuerterminal gesendet werden, und wobei die Vermessungs- und Kartierungsparameter eine Vielzahl von Probenpunkten zur Vermessung und Kartierung umfassen, auf deren Grundlage das unbemannte Luftfahrzeug zur Vermessung und Kartierung eine Vermessung und Kartierung in dem zu vermessenden und zu kartierenden Gebiet durchführt; und
Durchführen (620) von mindestens einer Fotokombination und einem Fotostitching an einer Vielzahl von Fotos der Vermessungs- und Kartierungsfotosammlung, um eine Vermessungsund Kartierungskarte zu erhalten, die dem zu vermessenden und zu kartierenden Gebiet entspricht.

13. Verfahren nach Anspruch 12, wobei das Durchführen (620) von mindestens einer Fotokombination und einem Fotostitching an einer Vielzahl von Fotos der Vermessungs- und Kartierungsfotosammlung, um eine Vermessungs- und Kartierungskarte zu erhalten, die dem zu vermessenden und zu kartierenden Gebiet entspricht, umfasst:

Erhalten, in der Vermessungs- und Kartierungsfotosammlung, eines zentralen Vermessungsund Kartierungsfotos, das an mindestens einem zentralen Fotopunkt aufgenommen wurde, und peripherer Vermessungs- und Kartierungsfotos, die an einer Vielzahl peripherer Fotopunkte aufgenommen wurden, die mit jedem des mindestens einen zentralen Fotopunktes verbunden sind;
Zusammenfügen jedes zentralen Vermessungs- und Kartierungsfotos und der entsprechenden peripheren Vermessungs- und Kartierungsfotos zu einem kombinierten Fotografiefoto entsprechend dem Grad der Fotoüberlappung zwischen jedem der peripheren Vermessungs- und Kartierungsfotos und dem entsprechenden zentralen Vermessungs- und Kartierungsfoto; und
Erstellen der Vermessungs- und Kartierungskarte, die dem zu vermessenden und zu kartographierten Gebiet entspricht, entsprechend dem kombinierten Foto, das jedem der mindestens einen zentralen Fotografierpunkt entspricht.

14. Verfahren nach Anspruch 12 oder 13, wobei die Vermessungs- und Kartierungskarte des zu vermessenden und zu kartierenden Gebiets mindestens eines der folgenden Elemente umfasst:
ein digitales Oberflächenmodell des zu vermessenden und zu kartierenden Gebiets, eine dreidimensionale Karte des zu vermessenden und zu kartierenden Gebiets und eine ebene Karte des zu vermessenden und zu kartierenden Gebiets.

15. Vermessungs- und Kartierungsvorrichtung für ein Steuerterminal, **dadurch gekennzeichnet, dass** sie, angewendet auf das Vermessungs- und Kartierungssystem nach einem der Ansprüche 1 bis 2, Folgendes umfasst:

ein Modul (710) zum Bestimmen von Vermessungs- und Kartierungsparametern, das so konfiguriert ist, dass es Vermessungs- und Kartierungsparameter bestimmt, die zu einem zu vermessenden und zu kartierenden Gebiet passen, wobei die Vermessungs- und Kartierungsparameter eine Vielzahl von Probepunkten zur Vermessung und Kartierung umfassen, auf deren Grundlage ein unbemanntes Luftfahrzeug zur Vermessung und Kartierung in dem zu vermessenden und zu kartierenden Gebiet eine Vermessung und Kartierung durchführt; und
ein Modul (720) zum Senden von Vermessungsund Kartierungsparametern, das so konfiguriert ist, dass es die Vermessungs- und Kartierungsparameter zur Vermessung und Kartierung an das unbemannte Luftfahrzeug sendet.

## Revendications

1. Système d'arpentage et de cartographie, comprenant un terminal de commande (10), un véhicule aérien sans pilote pour l'arpentage et la cartographie (20), et un terminal au sol (30),

**caractérisé en ce que**, le terminal de commande (10) est configuré pour déterminer des paramètres d'arpentage et de cartographie correspondant à une zone à arpenter et à cartographier et envoyer les paramètres d'arpentage et de cartographie au véhicule aérien sans pilote pour l'arpentage et la cartographie, et les paramètres d'arpentage et de cartographie comprennent une pluralité de points d'échantillonnage pour l'arpentage et la cartographie sur la base desquels le véhicule aérien sans pilote pour l'arpentage et la cartographie effectue l'arpentage et la cartographie dans la zone à arpenter et à cartographier;

le véhicule aérien sans pilote pour l'arpentage et la cartographie est configuré pour recevoir les paramètres d'arpentage et de cartographie et effectuer une photographie en vol dans la zone à arpenter et à cartographier selon les paramètres d'arpentage et de cartographie pour obtenir une collection de photos d'arpentage et de cartographie correspondant à la pluralité de points d'échantillonnage pour l'arpentage et la cartographie ; et

le terminal au sol est configuré pour obtenir la collection de photos d'arpentage et de cartographie et effectuer au moins une combinaison de photos et un assemblage de photos sur une pluralité de photos de la collection de photos d'arpentage et de cartographie pour obtenir une carte d'arpentage et de cartographie correspondant à la zone à arpenter et à cartographier,

dans lequel le terminal de commande (10) est configuré pour :

obtenir un point d'emplacement de photographie de référence correspondant à la zone à arpenter et à cartographier, et établir une relation de cartographie entre un point de photographie dans un ensemble de points de photographie combinés et le point d'emplacement de photographie de référence ; déterminer une pluralité de points d'emplacement de photographie auxiliaires correspondant au point d'emplacement de photographie de référence selon la relation de cartographie et selon une relation de position relative prédéfinie entre chaque deux points de photographie dans l'ensemble de points de photographie combinés ; et utiliser le point d'emplacement de photographie de référence et la pluralité de points d'emplacement de photographie auxiliaires comme la pluralité de points d'échantillonnage pour l'arpentage et la cartographie sur la base desquels le véhicule aérien sans pilote pour l'arpentage et la cartographie effectue l'arpentage et la cartographie dans la zone à arpenter et à cartographier, ou

le terminal de commande (10) est configuré pour :

déterminer une ou une pluralité de zones de photographie combinées pour l'arpentage et la cartographie dans la zone à arpenter et à cartographier selon les informations de la zone à arpenter et à cartographier et selon une zone de photographie combinée correspondant à un ensemble de points de photographie combinés ; déterminer une pluralité de points d'emplacement de photographie dans la zone de photographie combinée pour l'arpentage et la cartographie selon une relation de position relative prédéfinie entre chaque deux points de photographie dans l'ensemble de points de photographie combinés ; et utiliser la pluralité de points d'emplacement de photographie comme la pluralité de points d'échantillonnage pour l'arpentage et la cartographie sur la base desquels le véhicule aérien sans pilote pour l'arpentage et la cartographie effectue l'arpentage et la cartographie dans la zone à arpenter et à cartographier.

2. Système d'arpentage et de cartographie selon la revendication 1, comprenant en outre un véhicule aérien sans pilote pour le fonctionnement ;

dans lequel le terminal de commande (10) est en outre configuré pour utiliser la zone à arpenter et à cartographier en tant que zone d'opération, obtenir des données de carreaux de carte correspondant à la zone d'opération à partir du terminal au sol, générer une carte de zone de la zone d'opération selon les données de carreaux de carte et afficher la carte de zone, déterminer au moins un tracé d'opération dans la zone d'opération selon au moins un point de localisation de zone sélectionné par un utilisateur à partir de la carte de zone, générer un itinéraire d'opération correspondant à l'au moins un tracé d'opération, et envoyer l'itinéraire d'opération au véhicule aérien sans pilote pour l'opération ; et

le véhicule aérien sans pilote pour l'exploitation est configuré pour recevoir l'itinéraire d'exploitation et effectuer une opération de vol dans l'au moins une parcelle d'exploitation selon l'itinéraire d'exploitation

3. Procédé d'arpentage et de cartographie pour un terminal de commande, **caractérisé par**, appliqué au système d'arpentage et de cartographie selon l'une quelconque des revendications 1-2, dans lequel le procédé comprend :

déterminer (210, 310, 410) des paramètres d'arpentage et de cartographie correspondant à une zone à arpenter et à cartographier, dans lequel les paramètres d'arpentage et de cartographie comprennent une pluralité de points d'échantillonnage pour l'arpentage et la cartographie sur la base desquels un véhicule aérien sans pilote pour l'arpentage et la cartographie effectue l'arpentage et la cartographie dans la zone à arpenter et à cartographier ; et

envoyer (220, 320, 420) les paramètres d'arpentage et de cartographie au véhicule aérien sans pilote pour l'arpentage et la cartographie

4. Procédé selon la revendication 3, dans lequel la détermination (210, 310, 410) des paramètres d'arpentage et de cartographie correspondant à une zone à arpenter et à cartographier comprend :

obtenir (311) un point d'emplacement de photographie de référence correspondant à la zone à arpenter et à cartographier, et établir une relation de cartographie entre un point de photographie dans un ensemble de points de photographie combinés et le point de localisation de photographie de référence ;

déterminer (312) une pluralité de points d'emplacement de photographie auxiliaires correspondant au point d'emplacement de photographie de référence selon la relation de cartographie et une relation de position relative prédéfinie entre chaque deux points de photographie dans l'ensemble de points de photographie combinés ; et

l'utilisation (313) du point d'emplacement de photographie de référence et de la pluralité de points d'emplacement de photographie auxiliaires comme la pluralité de points d'échantillonnage pour l'arpentage et la cartographie sur la base desquels le véhicule aérien sans pilote pour l'arpentage et la cartographie effectue l'arpentage et la cartographie dans la zone à arpenter et à cartographier.

5. Procédé selon la revendication 3, dans lequel la détermination (210, 310, 410) des paramètres d'arpentage et de cartographie correspondant à une zone à arpenter et à cartographier comprend :

la détermination (411) d'une ou d'une pluralité de zones de photographie combinées pour l'arpentage et la cartographie dans la zone à arpenter et à cartographier selon les informations de la zone à arpenter et à cartographier et une zone de photographie combinée correspondant à un ensemble de points de photographie combinés ;

déterminer (412) une pluralité de points d'emplacement de photographie dans la zone de photographie combinée pour l'arpentage et la cartographie selon une relation de position relative prédéfinie entre chaque deux points de photographie dans l'ensemble de points de photographie combinés ; et

l'utilisation (413) de la pluralité de points d'emplacement de photographie comme la pluralité de points d'échantillonnage pour l'arpentage et la cartographie sur la base desquels le véhicule aérien sans pilote pour l'arpentage et la cartographie effectue l'arpentage et la cartographie dans la zone à arpenter et à cartographier

6. Procédé selon la revendication 5, dans lequel il y a une zone de chevauchement entre chaque deux d'une pluralité de photos prises selon une pluralité de points de photographie dans l'ensemble combiné de points de photographie ; et

il existe une zone de chevauchement entre chaque deux de la pluralité de zones de photographie combinées pour l'arpentage et la cartographie déterminées dans la zone à arpenter et à cartographier,

dans lequel les zones de photographie combinées pour l'arpentage et la cartographie sont des zones de photographie formées en combinant et/ou en assemblant la pluralité de photos après avoir obtenu la pluralité de photos prises selon la pluralité de points de photographie dans l'ensemble de points de photographie combinés ; et

une carte d'arpentage et de cartographie de la zone à arpenter et à cartographier est formée en combinant et/ou en assemblant chacune de la pluralité de zones de photographie combinées pour l'arpentage et la cartographie

7. Procédé d'arpentage et de cartographie pour un véhicule aérien sans pilote pour l'arpentage et la cartographie, **caractérisé par**, appliqué au système d'arpentage et de cartographie selon l'une quelconque des revendications 1-2, comprenant :

recevoir (510) des paramètres d'arpentage et de cartographie envoyés par un terminal de commande, les paramètres d'arpentage et de cartographie étant déterminés par le terminal de commande en fonction d'une zone à arpenter et à cartographier, et les paramètres d'arpentage et de cartographie comprenant une pluralité de points d'échantillonnage pour l'arpentage et la cartographie sur la base desquels un véhicule aérien sans pilote pour l'arpentage et la cartographie effectue l'arpentage et la cartographie dans la zone à arpenter et à cartographier ; et

effectuer (520) une photographie en vol dans la zone à arpenter et à cartographier selon les paramètres d'arpentage et de cartographie pour obtenir une collection de photos d'arpentage et de cartographie correspondant à la pluralité de points d'échantillonnage pour le relevé et la cartographie.

8. Procédé selon la revendication 7, dans lequel effectuer (520) une photographie en vol dans la zone à arpenter et à cartographier selon les paramètres d'arpentage et de cartographie pour obtenir une collection de photos d'arpentage et de cartographie correspondant à la pluralité de points d'échantillonnage pour d'arpentage et la cartographie comprend :
obtenir, lorsqu'il est déterminé de voler vers chacun de la pluralité de points d'échantillonnage pour l'arpentage et la cartographie selon les informations de position géographique de chacun de la pluralité de points d'échantillonnage pour l'arpentage et la cartographie, des photos d'arpentage et de cartographie correspondant respectivement à chacun de la pluralité de points d'échantillonnage pour l'arpentage et la cartographie par photographie pour former la collection de photos d'arpentage et de cartographie

9. Procédé selon la revendication 7 ou 8, avant la réception (510) de paramètres d'arpentage et de cartographie envoyés par un terminal de commande, comprenant en outre :

recevoir au moins une instruction de commande de vol envoyée par le terminal de commande, et effectuer au moins l'une des opérations suivantes dans l'air en fonction de l'instruction de commande de vol : se déplacer dans une direction donnée et se déplacer d'une distance donnée ;
effectuer un vol stationnaire à une position actuelle selon une instruction de vol stationnaire envoyée par le terminal de commande ; et
renvoyer une coordonnée de position géographique de la position actuelle au terminal de commande en fonction des informations d'interrogation de position envoyées par le terminal de commande, la coordonnée de position géographique étant déterminée par le terminal de commande comme un point de localisation de photographie de référence

10. Procédé selon l'une quelconque des revendications 7 à 9, dans lequel les paramètres d'arpentage et de cartographie comprennent en outre une altitude de vol définie, et la réalisation (520) d'une photographie en vol dans la zone à arpenter et à cartographier selon les paramètres d'arpentage et de cartographie pour obtenir une collection de photos d'arpentage et de cartographie correspondant à la pluralité de points d'échantillonnage pour l'arpentage et la cartographie comprend :
effectuer la photographie en vol dans la zone à arpenter et à cartographier à l'altitude de vol fixée selon les paramètres de relevé et de cartographie pour obtenir la collection de photos d'arpentage et de cartographie correspondant à la pluralité de points d'échantillon pour d'arpentage et la cartographie

11. Procédé selon l'une quelconque des revendications 7 à 10, après effectuer (520) un photographique en vol dans la zone à arpenter et à cartographier selon les paramètres d'arpentage et de cartographie pour obtenir une collection de photos d'arpentage et de cartographie correspondant à la pluralité de points d'échantillonnage pour l'arpentage et la cartographie, comprenant en outre au moins l'un des éléments suivants :

renvoyer chaque photo d'arpentage et de cartographie dans la collection de photos d'arpentage et de cartographie à un terminal au sol respectivement selon une séquence photographique ; et
stocker chaque photo d'arpentage et de cartographie dans la collection de photos d'arpentage et de cartographie dans une carte mémoire intégrée selon la séquence de photographie

12. Procédé d'arpentage et de cartographie pour un terminal au sol, **caractérisé en ce que**, appliqué au système d'arpentage et de cartographie selon l'une quelconque des revendications 1-2, il comprend :

l'obtention (610) d'une collection de photos d'arpentage et de cartographie, la collection de photos d'arpentage et de cartographie étant obtenue par un photographie en vol effectué par un véhicule aérien sans pilote pour l'arpentage et la cartographie dans une zone à arpenter et à cartographier selon des paramètres d'arpentage et de cartographie envoyés par un terminal de commande, et les paramètres d'arpentage et de cartographie comprenant une pluralité de points d'échantillonnage pour l'arpentage et la cartographie sur la base desquels le véhicule aérien sans pilote pour l'arpentage et la cartographie effectue l'arpentage et la cartographie dans la zone à arpenter et à cartographier ; et
effectuer (620) au moins une combinaison de photos ou un assemblage de photos sur une pluralité de photos de la collection de photos d'arpentage et de cartographie pour obtenir une carte d'arpentage et de cartographie correspondant à la zone à arpenter et à cartographier.

13. Procédé selon la revendication 12, dans lequel effectuer (620) au moins une combinaison de photos et d'un assemblage de photos sur une pluralité de photos de la collection de photos d'arpentage et de cartographie pour obtenir une carte d'arpentage et de cartographie correspondant à la zone à arpenter et à cartographier comprend :

l'obtention, dans la collection de photos d'arpentage et de cartographie, d'une photo d'arpentage et de cartographie centrale prise à au moins un point de photographie central et de photos d'arpentage et de cartographie périphériques prises à une pluralité de points de photographie périphériques associés à chacun des au moins un point de photographie central ;

l'assemblage de chaque photo d'arpentage et de cartographie centrale et des photos d'arpentage et de cartographie périphériques correspondantes en une photo photographique combinée selon un degré de chevauchement de photos entre chacune des photos d'arpentage et de cartographie périphériques et la photo d'arpentage et de cartographie centrale correspondante ; et

l'obtention de la carte d'arpentage et de cartographie correspondant à la zone à arpenter et à cartographier en fonction de la photo photographique combinée correspondant à chacun des au moins un point de photographie central.

14. Procédé selon la revendication 12 ou 13, dans lequel la carte d'arpentage et de cartographie de la zone à arpenter et à cartographier comprend au moins l'un des éléments suivants :

un modèle numérique de surface de la zone à relever et à cartographier, une carte tridimensionnelle de la zone à relever et à cartographier, et une carte plane de la zone à relever et à cartographier

15. Dispositif d'arpentage et de cartographie pour un terminal de commande, **caractérisé en ce que**, appliqué au système d'arpentage et de cartographie selon l'une quelconque des revendications 1-2, il comprend :

un module de détermination de paramètres d'arpentage et de cartographie (710), configuré pour déterminer des paramètres d'arpentage et de cartographie correspondant à une zone à arpenter et à cartographier, les paramètres d'arpentage et de cartographie comprenant une pluralité de points d'échantillonnage pour l'arpentage et la cartographie sur la base desquels un véhicule aérien sans pilote pour l'arpentage et la cartographie effectue l'arpentage et la cartographie dans la zone à arpenter et à cartographier ; et

un module d'envoi de paramètres d'arpentage et de cartographie (720), configuré pour envoyer les paramètres d'arpentage et de cartographie au véhicule aérien sans pilote pour l'arpentage et la cartographie

20

10

30

FIG. 1

| Determining surveying and mapping parameters matching an area to be surveyed and mapped, the surveying and mapping parameters including a plurality of sample points for surveying and mapping based on which an unmanned aerial vehicle for surveying and mapping performs surveying and mapping in the area to be surveyed and mapped | Step 210 |

| Sending the surveying and mapping parameters to the unmanned aerial vehicle for surveying and mapping | Step 220 |

FIG. 2

Obtaining a reference photographing location point corresponding to the area to be surveyed and mapped, and establishing a mapping relationship between a photographing point in a combined photographing point set and the reference photographing location point — Step 311

Determining a plurality of auxiliary photographing location points corresponding to the reference photographing location point according to the mapping relationship and a preset relative position relationship between each two photographing points in the combined photographing point set — Step 312

Using the reference photographing location point and the plurality of auxiliary photographing location points as the plurality of sample points for surveying and mapping based on which the unmanned aerial vehicle for surveying and mapping performs surveying and mapping in the area to be surveyed and mapped — Step 313

Step 310

Sending the surveying and mapping parameters to the unmanned aerial vehicle for surveying and mapping — Step 320

FIG. 3a

FIG. 3b

Determining one or a plurality of combined photographing areas for surveying and mapping within the area to be surveyed and mapped according to information of the area to be surveyed and mapped and a combined photographing area corresponding to a combined photographing point set ⟍ Step 411

Determining a plurality of photographing location points in the combined photographing area for surveying and mapping according to a preset relative position relationship between each two photographing points in the combined photographing point set ⟍ Step 412

Using the plurality of photographing location points as the plurality of sample points for surveying and mapping based on which the unmanned aerial vehicle for surveying and mapping performs surveying and mapping in the area to be surveyed and mapped ⟍ Step 413

Step 410

Sending the surveying and mapping parameters to the unmanned aerial vehicle for surveying and mapping ⟍ Step 420

FIG. 4a

410      510    410      510

40              50

410      510  410      510

FIG. 4b

receiving surveying and mapping parameters sent by a control terminal, the surveying and mapping parameters being determined by the control terminal according to an area to be surveyed and mapped, and the surveying and mapping parameters including a plurality of sample points for surveying and mapping based on which an unmanned aerial vehicle for surveying and mapping performs surveying and mapping in the area to be surveyed and mapped ⟋Step 510

performing a flight photographing in the area to be surveyed and mapped according to the surveying and mapping parameters to obtain a surveying and mapping photo collection corresponding to the plurality of sample points for surveying and mapping ⟋Step 520

FIG. 5

Obtaining a surveying and mapping photo collection, the surveying and mapping photo collection being obtained by a flight photographing performed by an unmanned aerial vehicle for surveying and mapping in an area to be surveyed and mapped according to surveying and mapping parameters sent by a control terminal, and the surveying and mapping parameters including a plurality of sample points for surveying and mapping based on which the unmanned aerial vehicle for surveying and mapping performs surveying and mapping in the area to be surveyed and mapped

Step 610

Performing at least one of photo combination and photo stitching on a plurality of photos of the surveying and mapping photo collection to obtain a surveying and mapping map corresponding to the area to be surveyed and mapped

Step 620

FIG. 6

Surveying and mapping parameter determining module — 710

Surveying and mapping parameter sending module — 720

FIG. 7

Surveying and mapping parameter receiving module — 810

Surveying and mapping photo collection photographing module — 820

FIG. 8

Surveying and mapping photo collection obtaining module — 910

Surveying and mapping map generating module — 920

FIG. 9

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160117853 A1
- WO 2017197556 A1
- US 20180189971 A1